# EUROPEAN PATENT APPLICATION

(11) **EP 2 402 796 A2**
(43) Date of publication of application: **04.01.2012**
(21) Application number: 11182406.6
(22) Date of filing: 23.08.2007
(51) Int. Cl.: G02B 1/04, C08G 77/04, B29C 33/10, C08L 83/00, C08L 83/04, B29C 45/34, B29D 11/00

(54) **Optical devices and silicone compositions and processes fabricating the optical devices**

(30) Priority: 28.08.2006 US 467832
(62) Divisional of application: 07811498.0
(71) Applicant: Dow Corning Corporation, Midland, Michigan 48686-0994 (US)
(72) Inventor: Bahadur, Maneesh, Midland, MI Michigan 48640 (US); Harkness, Brian, Robert, Midland, MI Michigan 48640 (US); Zarisfi, Afrooz, Midland, MI Michigan 48640 (US); Norris, Ann, Walstrom, Midland, MI Michigan 48642 (US)
(74) Representative: Neilson, Martin Mark

(57) **Abstract**

Silicone compositions that cure to form cured silicone resins are used to prepare optical devices, such as optical waveguides, lightguides, and LED packages. The optical devices may be prepared by various processes, including an injection molding process.

## Description

### RELATED APPLICATIONS

This patent application claims priority to and all advantages of United States Non-Provisional Patent Application Number 11/467,832 filed on August 28, 2006.

### FIELD OF THE INVENTION

Optical ,devices and silicone compositions and processes for fabricating optical devices, such as lightguides, optical waveguides, and LED packages are disclosed. The lightguide is suitable for use in various applications including vehicle lighting applications, such as headlamps.

### BACKGROUND OF THE INVENTION

Light emitting diodes (LEDs) may provide the benefits of reduced size and reduced energy usage as compared to incandescent bulbs. In addition, LEDs may have longer life than incandescent bulbs. LEDs, particularly high brightness LEDs (HB LEDs), are useful in applications where the HB LEDs are recessed from a viewing surface because LEDs have high lumen output. Such applications include backlighting units for displays, automotive lamp applications, (e.g., headlamps and tail lamps), and message board applications.

Lightguides are used with the HB LEDs to transmit light to the viewing surface. Lightguides may have various sizes and shapes, such as a flat or planar shape for homogenous illumination of a wide area, or a pipe design for illuminating a smaller well defined area.

### Problems to be Solved

LEDs can generate both high thermal flux and high optical flux. Conventional organic lightguides and LED packages, such as those fabricated from polymethyl methacrylate (PMMA), polycarbonate (PC), or cyclo olefin copolymer (COC) used in conjunction with LEDs may suffer from the drawback of insufficient stability when exposed to heat and/or radiation; ultra-violet (UV) and/or visible radiation. Organic lightguides may suffer from loss of transmittance during the lifetime of the device in which the lightguide is used. There is a need for lightguides with improved optical transmission over the lifetime of the device in which the lightguide is used, as compared to known lightguides.

### SUMMARY OF THE INVENTION AND ADVANTAGES

Optical devices, such as lightguides, may be prepared using silicone compositions described herein.

### DETAILED DESCRIPTION

All amounts, ratios, and percentages are by weight unless otherwise indicated. The following is a list of definitions as used in this application.

### Definition

The terms "a" and "an" each mean one more.

The abbreviation "M" means a siloxane unit of formula R₃SiO_{1/2}, where each R independently represents a monovalent atom or group.

The abbreviation "D" means a siloxane unit of formula R₂SiO_{2/2}, where each R independently represents a monovalent atom or group.

The abbreviation "T" means a siloxane unit of formula RSiO_{3/2}, where R represents a monovalent atom or group.

The abbreviation "Q" means a siloxane unit of formula SiO_{4/2}.

The abbreviation "Me" represents a methyl group.

The abbreviation "Ph" represents a phenyl group.

The abbreviation "Vi" represents a vinyl group.

"Combination" means two or more items put together by any method.

A "lightguide" means a shaped article that carries light from a point-like light source, such as an LED, to a target such as a target line or target plane by internal reflection.

A "silylated acetylenic inhibitor" means any reaction product of an acetylenic alcohol inhibitor and a silane.

### Process

Optical devices such as lightguides may be prepared using the silicone compositions described herein by a process comprising: i) shaping the silicone composition and ii) curing the silicone composition to form an optical device such as a lightguide. Step i) may be performed by a process such as injection molding, transfer molding, casting, extrusion, overmolding, compression molding, and cavity molding. The process selected for step i) will depend on various factors including the size and shape of the lightguide to be produced and the silicone composition selected.

In an exemplary molding process step i) may be performed by a process comprising:
1) heating a mold having a mold cavity at a temperature ranging from 100 °C to 200 °C;
2) feeding a quantity of a silicone composition having a viscosity ranging from 50 cps to 3,000 cps at operating temperatures of the process to an assembly for preventing the silicone composition from flowing backward out of the assembly;
3) injecting the silicone composition from the assembly into a mold cavity through a gate, where
   the mold cavity has a top and a bottom,
   a vent is located at the top of the mold cavity,
   the vent comprises a channel 0.1 mm to 1 mm wide by 0.0001 mm to 0.001 mm deep,
   the gate may be located at or near the bottom of the mold cavity, and injecting is performed at a pressure ranging from 1,000 psi to 10,000 psi, alternatively 2,000 psi to 6,000 psi, for up to 5 seconds;
4) holding the silicone composition at 1,000 psi to 10,000 psi for an amount of time sufficient to prevent the silicone composition from flowing out of the mold cavity;
5) curing the product of step 4). Step 4) and step 5) are performed until the resulting shape is hardened sufficiently to be removed from the mold.

The method may further comprise optional steps. Optional step 6) comprises post curing the product of step 5). Step 6) may be performed by heating at a temperature greater than the molding process temperature, e.g., ranging from 150 °C to 200 °C. Optional step 7) comprises refilling the assembly using up to 3000 psi pressure after step 5) or step 6), when present. The method may optionally further comprise applying a mold release agent to the mold cavity before step 3). The method may be used to prepare optical devices such as lenses and lightguides. The lens (either a discrete lens or an overmolded lens) may be installed, for example, in an LED package. The lightguide may be installed, for example, in a vehicle lighting application.

The assembly in step 2) may be, for example, a screw check valve assembly or a plunger assembly. The time for step 4) may be up to 15 seconds, alternatively 8.5 seconds to 12.5 seconds. The time for step 5) may be 10 seconds to 300 seconds, alternatively 10 seconds to 120 seconds, and alternatively 25 to 50 seconds. The process steps may be performed while the mold is heated. The exact temperature depends on various factors, including the curing behavior of the silicone composition selected, however, the mold may be heated at a temperature ranging from 100 °C to 200 °C, alternatively 150°C to 200 °C.

### Molding Equipment

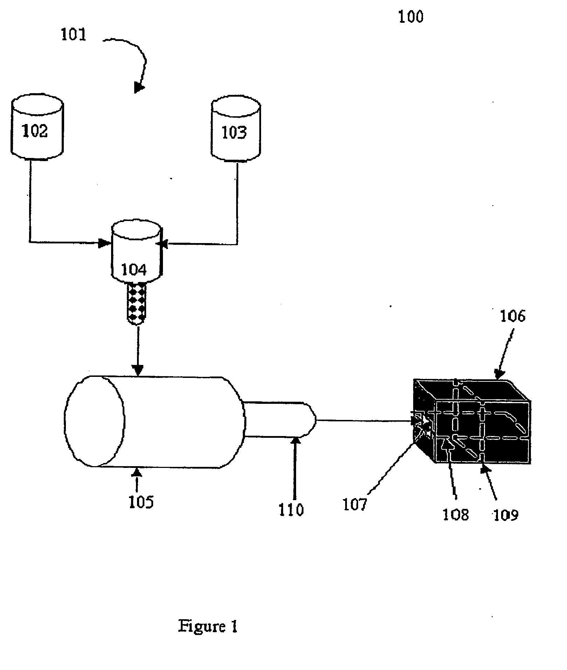

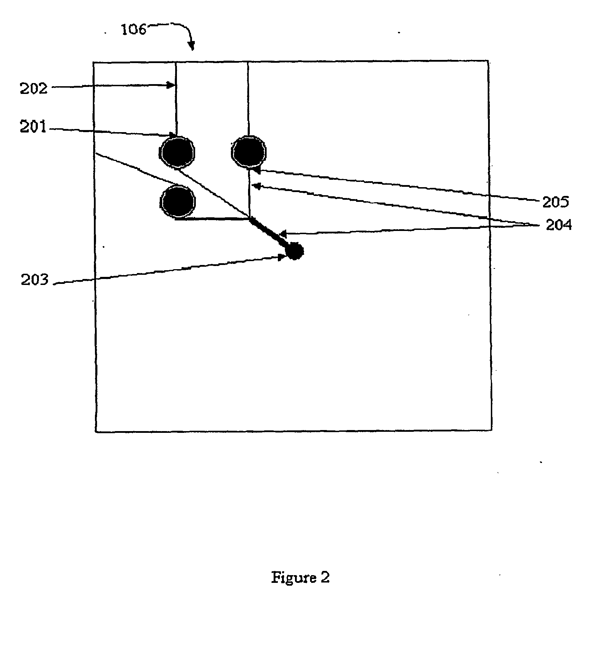

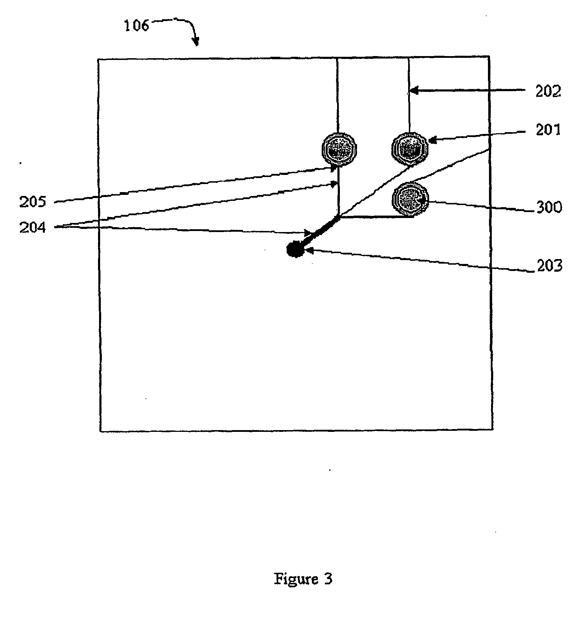

The process described above may be performed using injection molding equipment that is known in the art and commercially available, for example, a liquid injection molding apparatus, Model No. 270S 250-60, from Arburg, Inc., of Newington, Connecticut, U.S.A. Figure 1 is a schematic representation of liquid injection molding process equipment 100 for use in the method of this invention. The liquid injection molding process equipment 100 includes a feed system 101 for the two parts of a two part silicone encapsulant composition. The two parts are fed from the feed tanks 102, 103 to static mixer 104, which mixes the two parts. The resulting silicone composition enters extruder 105 and assembly 110 for preventing the silicone composition from flowing backward. The silicone composition is then forced into a mold 106 through an inlet 107 to a sprue and runner system (not shown). The mold 106 may have various configurations. For example, Figures 2 and 3 represent cross sectional views taken along cross section line and 109 and show a mold 106 for making curved lenses. Alternatively, a one part curable liquid can be fed directly into extruder 105 and assembly 110 from feed tank 102 (bypassing the static mixer 104).

Figures. 2 and 3 show cross sections of opposing sides of a mold 106 taken along line 109 in Figure 1. The mold 106 has mold cavities 201 with vents 202 at the top of each mold cavity 201. The silicone composition enters the mold 106 from a sprue 203 and flows through runners 204. The silicone composition enters the mold cavities 201 through gates 205 at the bottom of each mold cavity 201. One side of the mold 106 has mold cavities 201 with hemispherical buttons 300 protruding from the mold cavities 201. The buttons 300 can be used for forming a curved molded shape and for aiding in de-molding the molded shape.

### Silicone Composition

Various silicone compositions may be used to prepare the optical device. The ingredients of the silicone composition may be selected such that a lightguide prepared by curing the composition has desired properties for a given application. The lightguide may be used, for example, in backlighting units for displays, vehicle lighting applications (*e.g*., automotive exterior lighting applications such as headlamps, signal lamps, tail lamps, turn lamps, forward lighting, center high-mount stop lamps, brake lighting, rear combination lamps, backup lamps, fog lamps, and puddle lamps and automotive interior lighting applications such as map lights, reading lights, interior dome lights, door lights, ambience lighting, and dashboard backlighting), and message board applications.

A cured silicone resin prepared by curing a silicone composition may have a hardness as measured by durometer Shore A of at least 50, alternatively at least 60. When the silicone composition will be used to fabricate a lightguide, then the cured silicone resin may have a hardness as measured by Shore A of at least 50, alternatively Shore D of at least 20. The lightguide may have, at a wavelength of 400 nm, an optical clarity greater than 50 %, alternatively 80 % to 100 %, and alternatively 90 % to 100 %, in a section having thickness of at least 1.5 mm, alternatively thickness ranging from 1.5 mm to 4 mm.

For some lightguide applications, the cured silicone resin may be non-yellowing when exposed to radiation, or heat, or both. For example, the cured silicone resin may exhibit no change in Gardner color scale according to ASTM D1544 when heated at 150°C for at least 5 days in a section having thickness of 5 mm. The lightguide may have transmission loss not greater than 20 %, alternatively not greater than 15 %, when heated at 150 °C for at least 7 days, alternatively 7 to 60 days (in a section having thickness of at least 1.5 mm, alternatively thickness ranging from 1.5 mm to 100 mm, and alternatively thickness ranging from 1.5 mm to 4 mm). The RI of the lightguide may be greater than 1.4, alternatively the RI of the lightguide may range from 1.46 to 1.57. RI may be adjusted by changing amount of aromatic groups (*e.g*., phenyl) and nonaromatic groups (*e.g*., methyl) in the silicone composition used to make the lightguide.

Alternatively, a commercially available optical silicone encapsulant composition may be used in the process and equipment described above at paragraphs [0020] to [0024]. Such optical silicone encapsulant compositions include, SYLGARD® 184 from Dow Corning Corporation of Midland, Michigan, U.S.A. Alternatively, organopolysiloxane resin compositions in U.S. Patent 6,509,423 may be used in this process.

An exemplary silicone composition comprises:
(A) a polydiorganosiloxane having an average, per molecule, of at least two aliphatically unsaturated organic groups and at least one aromatic group;
(B) a branched polyorganosiloxane having an average, per molecule, of at least one aliphatically unsaturated organic group and at least one aromatic group;
(C) a polyorganohydrogensiloxane having an average per molecule of at least two silicon-bonded hydrogen atoms and at least one aromatic group, and
(D) a hydrosilylation catalyst.
This silicone composition may cure to form a cured silicone resin having a refractive index greater than 1.40. The silicone composition may cure to form a cured silicone resin with an optical transparency greater than 95 % at a thickness of 2.0 mm or less at 400 nm wavelength after heating at 200 °C for 14 days, alternatively optical transparency greater than 95 % at a thickness of 1.8 mm at 400 nm wavelength after heating at 200°C for 14 days.

### Ingredient (A) Polydiorganosiloxane

Ingredient (A) is a polydiorganosiloxane having an average per molecule of at least two aliphatically unsaturated organic groups and at least one aromatic group. Ingredient (A) can be a single polydiorganosiloxane or a combination comprising two or more polydiorganosiloxanes that differ in at least one of the following properties: structure, viscosity, average molecular weight, siloxane units, and sequence. The viscosity of ingredient (A) is not critical; however, viscosity may range from 10 to 1,000,000 mPa·s at 25°C, alternatively 100 to 50,000 mPa·s, to improve handling properties of the cured silicone resin prepared from the silicone composition. The amount of ingredient (A) in the composition may range from 10 to 40, alternatively 15 to 30, parts by weight based on the total weight of the composition.

The aliphatically unsaturated organic groups in ingredient (A) may be alkenyl exemplified by, but not limited to, vinyl, allyl, butenyl, pentenyl, and hexenyl, alternatively vinyl. The aliphatically unsaturated organic groups may be alkynyl groups exemplified by, but not limited to, ethynyl, propynyl, and butynyl. The aliphatically unsaturated organic groups in ingredient (A) may be located at terminal, pendant, or both terminal and pendant positions. The aromatic group or groups in ingredient (A) may be located at terminal, pendant, or both terminal and pendant positions. The aromatic group is exemplified by, but not limited to, ethylbenzyl, naphthyl, phenyl, tolyl, xylyl, benzyl, styryl, 1-phenylethyl, and 2-phenylethyl, alternatively phenyl. Ingredient (A) contains an average of at least one aromatic group per molecule. However, ingredient (A) may contain more than 40 mol%, alternatively more than 45 mol% aromatic groups.

The remaining silicon-bonded organic groups in ingredient (A), if any, may be monovalent substituted and unsubstituted hydrocarbon groups free of aromatics and free aliphatic unsaturation. Monovalent unsubstituted hydrocarbon groups are exemplified by, but not limited to alkyl groups such as methyl, ethyl, propyl, pentyl, octyl, undecyl, and octadecyl and cycloalkyl groups such as cyclohexyl. Monovalent substituted hydrocarbon groups are exemplified by, but not limited to halogenated alkyl groups such as chloromethyl, 3-chloropropyl, and 3,3,3-trifluoropropyl, fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl.

Ingredient (A) may have general formula (I): R¹₃SiO-(R²SiO)ₐ-SiR¹₃, where each R¹ and each R² are independently selected from the group consisting of aliphatically unsaturated organic groups, aromatic groups, and monovalent substituted and unsubstituted hydrocarbon groups described above, and subscript a is an integer having a value sufficient to provide ingredient (A) with a viscosity ranging from 10 to 1,000,000 mPa·s at 25 °C, with the proviso that on average at least two of R¹ and/or R² are unsaturated organic groups and at least one of R¹ and/or R² is an aromatic group. Alternatively, at least two of R¹ are unsaturated organic groups, at least one of R² is an aromatic group, and subscript a has a value ranging from 5 to 1,000. Alternatively, formula (I) is an α,ω-dialkenyl-functional polydiorganosiloxane.

### Ingredient (B) Branched Polyorganosiloxane

Ingredient (B) is a branched polyorganosiloxane having an average, per molecule, of at least one unsaturated organic group and at least one aromatic group. Ingredient (B) can be a single polyorganosiloxane or a combination comprising two or more polydiorganosiloxanes that differ in at least one of the following properties: structure, viscosity, average molecular weight, siloxane units, and sequence. The molecular weight of ingredient (B) is not critical, however, weight average molecular weight (Mw) may range from 500 to 10,000, alternatively 700 to 3,000. Ingredient (B) may be added to the composition in an amount of 35 to 75 parts by weight based on the total weight of the composition.

Ingredient (B) comprises units of formula R³SiO_{3/2}, where each R³ is independently selected from the group consisting of aliphatically unsaturated organic groups, aromatic groups, and monovalent substituted and unsubstituted hydrocarbon groups described above, with the proviso that on average, per molecule, at least one of R³ is an aliphatically unsaturated organic group and at least one R³ is an aromatic group.

Ingredient (B) may have unit formula (II): (R³SiO_{3/2})_{b}(R³₂SiO_{2/2})_{c}(R³₃SiO_{1/2})_{d}(SiO_{4/2})ₑ(XO_{1/2})_{f}, where R³ is as described above, X is a hydrogen atom or a monovalent hydrocarbon group such as an alkyl group, subscript b is a positive number, subscript c is 0 or a positive number, subscript d is 0 or a positive number, subscript e is 0 or a positive number, subscript f is 0 or a positive number, c/b is a number ranging from 0 to 10, d/b is a number ranging from 0 to 0.5, e/(b+c+d+e) is a number ranging from 0 to 0.3, and f/(b+c+d+e) is a number ranging from 0 to 0.4. In formula (II), the polyorganosiloxane contains an average of at least one aliphatically unsaturated organic group per molecule, however, 0.1 mol% to 40 mol% of R³ may be unsaturated organic groups. In formula (II), the polyorganosiloxane contains an average of at least one aromatic group per molecule, however, at least 10 mol% of R³ may be aromatic groups. Furthermore, in the D unit of formula R³₂SiO_{2/2}, at least 30 mol% of R³ may be aromatic groups. When ingredient f is a positive number, the composition may contain 2 to 17% of ingredient (B).

### Ingredient (C) Polyorganohydrogensiloxane

Ingredient (C) is a polyorganohydrogensiloxane having an average, per molecule, of at least two silicon bonded hydrogen atoms and at least one aromatic group. Ingredient (C) can be a single polyorganohydrogensiloxane or a combination comprising two or more polyorganohydrogensiloxanes that differ in at least one of the following properties: structure, viscosity, average molecular weight, siloxane units, and sequence. The viscosity of ingredient (C) is not critical and may range from 1 to 1,000 mPa·s at 25°C, alternatively 2 to 500 mPa·s. The aromatic groups are as exemplified above. Ingredient (C) may contain at least 15 mol%, alternatively at least 30 mol% aromatic groups.

Ingredient (C) may comprise a linear polyorganohydrogensiloxane of general formula (III): HR⁴₂SiO-(R⁴₂SiO)_{g}-SiR⁴₂H, where each R⁴ is independently a hydrogen atom, an aromatic group as exemplified above, or a monovalent substituted or unsubstituted hydrocarbon group free of aromatics and free aliphatic unsaturation as exemplified above, with the proviso that on average at least one R⁴ per molecule is an aromatic group, and subscript g is an integer with a value of 1 or more. Alternatively, at least one R⁴ per molecule is phenyl and g may range from I to 20, alternatively 1 to 10.

Alternatively, ingredient (C) may comprise a branched polyorganohydrogensiloxane of unit formula (IV): (R⁵SiO_{3/2})ₕ(R⁵₂SiO_{2/2})ᵢ(R⁵₃SiO_{1/2})ⱼ(SiO_{4/2})ₖ(XO)ₘ where X is as described above. Each R⁵ is independently a hydrogen atom, an aromatic group as exemplified above, or a monovalent substituted or unsubstituted hydrocarbon group free of aromatics and free aliphatic unsaturation as exemplified above, with the proviso that an average of at least two per molecule of R⁵ are hydrogen atoms. In formula (IV), the polyorganohydrogensiloxane contains an average of at least two silicon bonded hydrogen atoms per molecule, however, 0.1 mol% to 40 mol% of R⁵ may be hydrogen atoms. In formula (IV), the polyorganohydrogensiloxane contains an average of at least one aromatic group per molecule, however, at least 10 mol% of R⁵ may be aromatic groups. Furthermore, in the D unit of formula R⁵₂SiO_{2/2}, at least 30 mol% of R⁵ may be aromatic groups.

In formula (IV), subscript h is a positive number, subscript i is 0 or a positive number, subscript j is 0 or a positive number, subscript k is 0 or a positive number, subscript m is 0 or a positive number, i/h has a value ranging from 0 to 10, j/h has a value ranging from 0 to 5, k/(h+i+j+k) has a value ranging from 0 to 0.3, and m/(h+i+j+k) has a value ranging from 0 to 0.4.

The amount of ingredient (C) added may range from 10 to 50 parts by weight based on the total weight of the silicone composition. The amount of ingredient (C) may be selected such that the amount of silicon bonded hydrogen atoms in this silicone composition ranges from 0.1 mol to 10 mol, alternatively 0.1 to 5 mol, and alternatively 0.5 to 2 mol, per 1 mol of aliphatically unsaturated organic groups in this silicone composition.

### Ingredient (D) Hydrosilylation Catalyst

Ingredient (D) is a hydrosilylation catalyst. Ingredient (D) is added in an amount sufficient to promote curing of the silicone composition. However, the amount of ingredient (D) may range from 0.01 to 1,000 ppm, alternatively 0.01 to 100 ppm, and alternatively 0.01 to 50 ppm of platinum group metal based on the weight of this silicone composition.

Suitable hydrosilylation catalysts are known in the art and commercially available. Ingredient (D) may comprise a platinum group metal selected from the group consisting of platinum, rhodium, ruthenium, palladium, osmium or iridium metal or organometallic compound thereof, and a combination thereof. Ingredient (D) is exemplified by platinum black, compounds such as chloroplatinic acid, chloroplatinic acid hexahydrate, a reaction product of chloroplatinic acid and a monohydric alcohol, platinum bis-(ethylacetoacetate), platinum bis-(acetylacetonate), platinum dichloride, and complexes of said compounds with olefins or low molecular weight organopolysiloxanes or platinum compounds microencapsulated in a matrix or coreshell type structure. Complexes of platinum with low molecular weight organopolysiloxanes include 1,3-diethenyl-1,1,3,3-tetramethyldisiloxane complexes with platinum. These complexes may be microencapsulated in a resin matrix. Alternatively, the catalyst may comprise 1,3-diethenyl-1,1,3,3-tetramethyldisiloxane complex with platinum. When the catalyst is a platinum complex with a low molecular weight organopolysiloxane, the amount of catalyst may range from 0.02 to 0.2 parts by weight based on the total weight of the composition.

Suitable hydrosilylation catalysts for ingredient (D) are described in, for example, U.S. Patents 3,159,601; 3,220,972; 3,296,291; 3,419,593; 3,516,946; 3,814,730; 3,989,668; 4,784,879; 5,036,117; and 5,175,325 and EP 0 347 895 B. Microencapsulated hydrosilylation catalysts and methods of preparing them are also known in the art, as exemplified in U.S. Patent No. 4,766,176; and U.S. Patent No. 5,017,654.

### Additional Ingredients

The silicone composition described above may further comprise an additional ingredient selected from the group consisting of (E) an inhibitor, (F) a mold release agent, (G) an optically active agent, (H) a filler, (I) an adhesion promoter, (J) a heat stabilizer, (K) a flame retardant, (L) a reactive diluent, (M) an inhibitor, (N) a pigment, (O) a flame retarder, (P) an oxidation inhibitor, and a combination thereof, provided however that the additional ingredients and amounts added do not render the silicone composition incapable of curing to form a cured silicone resin with properties unsuitable for use in an optical device such as a lightguide. For example, for some applications, the silicone composition including any additional ingredients cures to form a cured silicone resin with an optical transparency > 95% at a thickness of 2.0 mm or less at 400 nm wavelength after heating at 200 °C for 14 days.

### Ingredient (E) Inhibitor

Ingredient (E) is an inhibitor. Ingredient (E) may comprise an organic acetylenic alcohol, a silylated acetylenic alcohol, or a combination thereof. Ingredient (E) in the silicone composition may be a silylated acetylenic inhibitor. Without wishing to be bound by theory, it is thought that adding a silylated acetylenic inhibitor may reduce yellowing of the cured silicone resin prepared from the silicone composition as compared to a cured silicone resin prepared from a hydrosilylation curable composition that does not contain an inhibitor or that contains an organic acetylenic alcohol inhibitor. Examples of organic acetylenic alcohol inhibitors are disclosed, for example, in EP 0 764 703 A2 and U.S. Patent 5,449,802 and include 1-butyn-3-ol, 1-propyn-3-ol, 2-methyl-3-butyn-2-ol, 3-methyl-1-butyn-3-ol, 3-methyl-1-pentyn-3-ol, 3-phenyl-1-butyn-3-ol, 4-ethyl-1-octyn-3-ol, 3,5-diemthyl-1-hexyn-3-ol, and 1-ethynyl-1-cyclohexanol. The silicone composition may be free of organic acetylenic alcohol inhibitors. "Free of organic acetylenic alcohol inhibitors" means that if any organic acetylenic alcohol is present in the composition, the amount present is insufficient to reduce optical transparency of the cured silicone resin to < 95 % at a thickness of 2.0 mm or less at 400 nm wavelength after heating at 200 °C for 14 days.

Ingredient (E) may be added in an amount ranging from 0.001 to 1 parts by weight based on the total weight of this silicone composition, alternatively 0.01 to 0.5 parts by weight. Suitable silylated acetylenic inhibitors for ingredient (E) may have general formula (V): 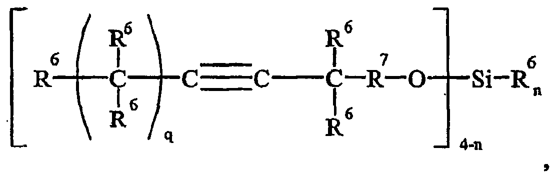 or
general formula (VI): 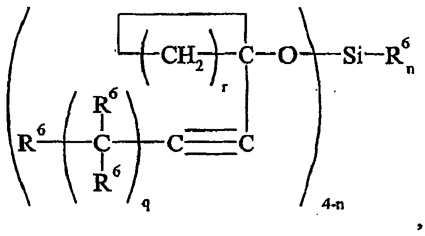 or a combination thereof;
where each R⁶ is independently a hydrogen atom or a monovalent organic group, and subscript n is 0, 1, 2, or 3, subscript q is 0 to 10, and subscript r is 4 to 12. Alternatively n is 1 or 3. Alternatively, in general formula (V), n is 3. Alternatively, in general formula (VI), n is 1. Alternatively q is 0. Alternatively, r is 5, 6, or 7, and alternatively r is 6. Examples of monovalent organic groups for R⁶ include an aliphatically unsaturated organic group, an aromatic group, or a monovalent substituted or unsubstituted hydrocarbon group free of aromatics and free aliphatic unsaturation, as described above.

Silylated acetylenic inhibitors are exemplified by (3-methyl-1-butyn-3-oxy)trimethylsilane, ((1,1-dimethyl-2-propynyl)oxy)trimethylsilane, bis(3-methyl-1-butyn-3-oxy)dimethylsilane, bis(3-methyl-1-butyn-3-oxy)silanemethylvinylsilane, bis((1,1-dimethyl-2-propynyl)oxy)dimethylsilane, methyl(tris(1,1-dimethyl-2-propynyloxy))silane, methyl(tris(3-methyl-1-butyn-3-oxy))silane, (3-methyl-1-butyn-3-oxy)dimethylphenylsilane, (3-methyl-1-butyn-3-oxy)dimethylhexenylsilane, (3-methyl-1-butyn-3-oxy)triethylsilane, bis(3-methyl-1-butyn-3-oxy)methyltrifluoropropylsilane, (3,5-dimethyl-1-hexyn-3-oxy)trimethylsilane, (3-phenyl-1-butyn-3-oxy)diphenylmethylsilane, (3-phenyl-1-butyn-3-oxy)dimethylphenylsilane, (3-phenyl-1-butyn-3-oxy)dimethylvinylsilane, (3-phenyl-1-butyn-3-oxy)dimethylhexenylsilane, (cyclohexyl-1-ethyn-1-oxy)dimethylhexenylsilane, (cyclohexyl-1-ethyn-1-oxy)dimethylvinylsilane, (cyclohexyl-1-ethyn-1-oxy)diphenylmethylsilane, (cyclohexyl-1-ethyn-1-oxy)trimethylsilane, and combinations thereof. Alternatively, ingredient (E) is exemplified by methyl(tris(1,1-dimethyl-2-propynyloxy))silane, ((1,1-dimethyl-2-propynyl)oxy)trimethylsilane, or a combination thereof.

The silylated acetylenic inhibitor may be prepared by methods known in the art for silylating an alcohol such as reacting a chlorosilane of formula R⁶ₙSiCl₄₋ₙ with an acetylenic alcohol of formula 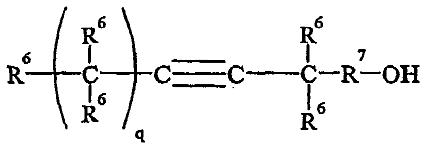 or 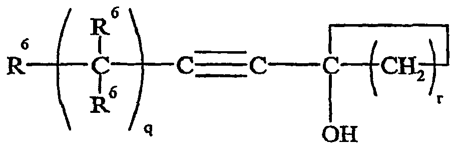 in the presence of an acid receptor. In these formulae, n, q, r, and R⁶ are as described above and R⁷ is a covalent bond or a divalent hydrocarbon group. Examples of silylated acetylenic inhibitors and methods for their preparation are disclosed, for example, in EP 0 764 703 A2 and U.S. Patent 5,449,802.

The silicone composition described above may further comprise one or more additional ingredients selected from the group consisting of (F) a mold release agent, (G) an optically active agent, (H) a filler, (I) an adhesion promoter, (J) a heat stabilizer, (K) a flame retardant, (L) a reactive diluent, (M) an inhibitor, (N) a pigment, (O) a flame retarder, (P) an oxidation inhibitor, and a combination thereof, provided however that the additional ingredients and amounts added do not render the silicone composition incapable of curing to form a cured silicone resin with properties unsuitable for use in an optical device such as a lightguide. For example, for some applications, the silicone composition including any additional ingredients cures to form a cured silicone resin with an optical transparency > 95 % at a thickness of 2.0 mm or less at 400 nm wavelength after heating at 200 °C for 14 days.

### Ingredient (F) Mold Release Agent

Ingredient (F) is an optional mold release agent. Ingredient (F) may have general formula (VI): R¹⁷₃SiO(R¹⁷₂SiO)ₐₐ(R¹⁷R¹⁸SiO)_{bb}SiR¹⁷₃, where each R¹⁷ is independently a hydroxyl group or a monovalent organic group, and each R¹⁸ is independently a monovalent organic group unreactive with aliphatically unsaturated organic groups and silicon-bonded hydrogen atoms in the composition, subscript aa has a value of 0 or greater, subscript bb has a value of 1 or greater with the proviso that aa and bb have may have values sufficient that the mold release agent has a viscosity of 50 to 3,000 cps at molding process temperatures. Alternatively, each R¹⁷ may independently be an alkyl group such as methyl, ethyl, propyl, or butyl or an alkoxy group such as methoxy, ethoxy, propoxy, or butoxy, and each R¹⁸ may independently be an aromatic group such as phenyl, tolyl, or xylyl. Alternatively each R¹⁷ may be methyl and each R¹⁸ may be phenyl. Examples of suitable mold release agents include trimethylsiloxy-terminated (dimethylsiloxane/phenylmethylsiloxane) copolymer having a viscosity of 100 to 500 cps at 25 °C.

Alternatively, ingredient (F) may comprise an α,ω-dihydroxy-functional polydiorganosiloxane that may be added to the composition in an amount ranging from 0 % to 5 %, alternatively 0.25 % to 2 % based on the weight of the composition. Ingredient (F) can be a single polydiorganosiloxane or a combination comprising two or more polydiorganosiloxanes that differ in at least one of the following properties: structure, viscosity, average molecular weight, siloxane units, and sequence. The viscosity of ingredient (F) is not critical and may range from 50 to 1,000 mPa·s at 25 °C. Ingredient (F) may contain at least one aromatic group per molecule, and the aromatic groups are as exemplified above. Ingredient (F) may contain at least 15 mol %, alternatively at least 30 mol % aromatic groups.

Ingredient (F) may comprise an α,ω-dihydroxy-functional polydiorganosiloxane of general formula (VI'): HOR⁸₂SiO-(R⁸₂SiO)ₒ-SiR⁸₂OH, where each R⁸ is independently an aromatic group as exemplified above, or a monovalent substituted or unsubstituted hydrocarbon group free of aromatics and free aliphatic unsaturation as exemplified above, with the proviso that on average at least one R⁸ per molecule is an aromatic group, and subscript o is an integer with a value of 1 or more. Alternatively, at least one R⁸ per molecule is phenyl and o may range from 2 to 8.

### Ingredient (G) Optically Active Agent

Ingredient (G) is an optically active agent. Examples of ingredient (G) include optical diffusants, phosphor powders, photonic crystals, quantum dots, carbon nanotubes, dyes such as fluorescent dyes or absorbing dyes, and combinations thereof. The exact amount of ingredient (G) depends on the specific optically active agent selected, however, ingredient (G) may be added in an amount ranging from 0% to 20%, alternatively 1% to 10% based on the weight of the silicone composition. Ingredient (G) may be mixed with the silicone composition or coated on a surface of the lightguide prepared by curing the silicone composition to a cured silicone resin.

### Ingredient (H) Filler

Ingredient (H) is a filler. Suitable fillers are known in the art and are commercially available. For example, ingredient (H) may comprise an inorganic filler such as silica, e.g., fumed silica, quartz powder, titanium oxide, glass, alumina, zinc oxide, or a combination thereof. The filler may have an average particle diameter of 50 nanometers or less and does not lower the percent transmittance by scattering or absorption. Alternatively, ingredient (H) may comprise an organic filler such as poly(meth)acrylate resin particles. Ingredient (H) may be added in an amount ranging from 0% to 50%, alternatively 1% to 5% based on the weight of the silicone composition.

The silicone composition described above may be prepared by any convenient means, such as mixing all ingredients at ambient or elevated temperature. The silicone composition may be prepared as a one-part composition or a multiple part composition. A one-part silicone composition can be prepared by mixing ingredients (A), (B), (C), and (D) and any additional ingredients, if present. If a one part silicone composition will be prepared, pot life of the composition may be extended by adding ingredient (E) described above. If the silicone composition will be used in a molding process, such as that described at paragraphs [0020] to [0024] above, then ingredient (F) may be added. In a multiple part composition, such as a two part composition, ingredients (C) and (D) are stored in separate parts. For example, a base part may be prepared by mixing ingredients comprising: 30 to 60 parts ingredient (A), 30 to 65 parts ingredient (B), and 0.0005 to 0.005 parts ingredient (D). The base part may optionally further comprise 0.2 to 5 parts ingredient (F). A curing agent part may be prepared by mixing ingredients comprising: 0 to 10 parts ingredient (A), 42 to 67 parts by weight ingredient (B), 20 to 50 parts by weight ingredient (C), and 0.001 to 1 part by weight ingredient (E). The base part and the curing agent part may be stored in separate containers until just prior to use, when the two parts are mixed together in a ratio of 1 to 10 parts base per 1 part curing agent.

The silicone composition described above may be used to form a cured silicone resin. The silicone composition may be cured at room temperature or with heating, however, heating the composition may accelerate curing. The silicone composition may be heated at a temperature ranging from 50 to 200°C for several minutes to several hours. The cured product obtained is a cured silicone resin.

Alternatively, the silicone composition for use in the process described above may exhibit properties including low viscosity (50 to 3,000 cps at molding process temperatures) and rapid cure times (10 seconds to 300 seconds). Low viscosity may be advantageous for injection molding because it may improve the ability of the silicone composition to rapidly and thoroughly fill mold features that define intricate optical features and smooth surfaces. Rapid cure time permits rapid production throughput. The cured silicone resin prepared by curing the silicone composition may exhibit properties including optical clarity, stability at high temperatures, and stability upon exposure to high flux at 400 nanometers (nm) to 650 nm.

The silicone composition may be an addition curable organopolysiloxane resin composition. An exemplary addition curable organopolysiloxane resin composition comprises:
(Q) 100 parts of an organopolysiloxane resin represented by the following average compositional formula

   R⁹ₛR¹⁰ₜSiO_{(4-s-t)/2} (VII)

   where each R⁹ is independently an aliphatically unsaturated organic group, such as an alkenyl group having 2 to 10 carbon atoms; each R¹⁰ is independently a substituted or unsubstituted monovalent hydrocarbon group other than R⁹, with the proviso that at least one R¹⁰ per molecule is an aromatic group, alternatively at least 50 mole % of R¹⁰ comprise aromatic groups such as phenyl groups, subscript s has a value ranging from 0.09 to 0.16, and subscript t has a value ranging from 1.00 to 1.20; with the proviso that the organopolysiloxane resin has a weight-average molecular weight equal to or exceeding 3000 with polystyrene as reference and determined by gel chromatography;
(R) 10 to 50 parts by weight of an organooligosiloxane represented by the following average compositional formula

   R¹¹ᵤR¹²ᵥSiO_{(4-u-v)/2} (VIII)

   where each R¹¹ is independently an aliphatically unsaturated organic group, such as an alkenyl group having 2 to 10 carbon atoms; each R¹² is independently a substituted or unsubstituted monovalent or non-substituted monovalent hydrocarbon group other than R¹¹, with the proviso that at least 10 mole % of R¹² comprise aromatic groups such as phenyl groups; subscript u has a value ranging from 0.60 to 0.80, and subscript v has a value ranging from 1.50 to 2.10;
(S) 20 to 100 parts by weight of an organohydrogenoligosiloxane or organohydrogenpolysiloxane represented by the following average compositional formula:

   H_{w}R¹³ₓSiO_{(4-w-x)/2} (IX)

   where each R¹³ is independently a substituted or unsubstituted monovalent or non-substituted monovalent hydrocarbon group other than an aliphatically unsaturated organic group, with the proviso that at least 20 mole % of R¹³ comprise aromatic groups such as phenyl groups; subscript w has a value ranging from 0.35 to 0.65, and subscript x has a value ranging from 0.90 to 1.70; and
(D) a catalytic quantity of a hydrosilylation catalyst. This addition curable organopolysiloxane composition may cure to form an article having a hardness ranging from 60 to 100 at 25 °C and 40 to 100 at 150 °C as measured by ASTM D2240-86.

Alternatively, in average compositional formula (VII), s may have a value ranging from 0.10 to 0.15, and t may have a value ranging from 1.00 to 1.15. Alternatively, in average compositional formula (VIII), u may have a value ranging from 0.60 to 0.80, and v may have a value ranging from 1.50 to 2.00. Alternatively, in average-compositional formula (IX), w may have a value ranging from 0.35 to 0.65, and x may have a value ranging from 1.30 to 1.70.

Alternatively, ingredient (R) in the addition-curable organopolysiloxane resin composition described above may comprise an organooligosiloxane expressed by the following formula:

(R¹⁵R¹⁶₂SiO)_{y} SiR¹⁶_{(4-y)} (X)

where each R¹⁵ is independently an aliphatically unsaturated organic group, such as an alkenyl group with 2 to 10 carbon atoms; each R¹⁶ is independently a substituted or unsubstituted monovalent hydrocarbon group other than R¹⁵, with the proviso that at least 10 mole % of R¹⁶ comprise aromatic groups such as phenyl groups; and subscript y is 2 or 3.

### Ingredient (Q)

In average compositional formula (VII), described above, R⁹ is exemplified by the unsaturated organic groups described above for ingredient (A). Alternatively, alkenyl groups with 2 to 10 carbon atoms for R⁹ include, but are not limited to, vinyl groups, allyl groups, butenyl groups, hexenyl groups, and decenyl groups. Examples of R¹⁰ include, but are not limited to, alkyl groups such as methyl groups, ethyl groups, propyl groups, and cyclohexyl groups; aromatic groups such as ethylbenzyl, naphthyl, phenyl, tolyl, xylyl, benzyl, styryl, 1-phenylethyl, and 2-phenylethyl, alternatively phenyl; and haloalkyl groups such as 3-chloropropyl groups, 3,3,3-trifluoropropyl groups, and 2-(nonafluoropropyl) ethyl groups. At least one R¹⁰ per molecule is an aromatic group, alternatively at least 50 mole % of all R¹⁰ per molecule may comprise aromatic groups, such as phenyl groups, while the remaining may be alkyl groups for providing a cured silicone resin with high transparency, strength, and hardness prepared by curing the above composition.

Siloxane units that form ingredient (Q) may be exemplified by ViMe₂SiO_{1/2} units, ViMePhSiO_{1/2} units, Me₃SiO_{1/2} units, Me₂SiO_{2/2} units, ViMeSiO_{2/2} units, PhSiO_{3/2} units, MeSiO_{3/2} units, and ViSiO_{3/2} units.

Examples of ingredient (Q) are organopolysiloxane resins shown by the siloxane unit formulae and average compositional formulae given below; the siloxane unit formulae indicate mole numbers of various siloxane units when all siloxane units of a molecule constitute 1 mole:
(i) Unit formula (ViMe₂SiO_{1/2})_{0.10}(PhSiO_{3/2})_{0.90}, which has average compositional formula Vi_{0.10}Me_{0.20}Ph_{0.20}SiO_{1.4}, where s =0.10, t =1.10, Ph/R^{10'} (mole %) = 74, Mw = 4300;
(ii) Unit formula (ViMe₂SiO_{1/2})_{0.14}(PhSiO_{3/2})_{0.86}, which has average compositional formula Vi_{0.14}Me_{0.28}Ph_{0.86}SiO_{1.34}, where s =0.14, t =1.14, Ph/R^{10'} (mole %) = 67, Mw = 3200;
(iii) Unit formula (ViMeSiO_{2/2})_{0.10}(PhSiO_{3/2})_{0.90}, which has average compositional formula Vi_{0.10}Me_{0.10}Ph_{0.90}SiO_{1.45}, where s =0.10, t =1.00, Ph/ R^{10'} (mole %) = 82, Mw = 8700;
(iv) Unit formula (ViMeSiO_{2/2})_{0.10}(Me₂SiO_{2/2})_{0.15}(PhSiO_{3/2})_{0.75}, which has average compositional formula Vi_{0.10}Me_{0.40}Ph_{0.75}SiO_{1.375}, where s =0.10, t =1.15, Ph/ R^{10'} (mole%) = 60, Mw = 7200;
where R^{10'} represents total mole quantity of Me and Ph, and Mw is a weight-average molecular weight using standard polystyrene as a reference determined by gel permeation chromatography. Ingredient (Q) is a organopolysiloxane resin having an average per molecule of at least two aliphatically unsaturated organic groups and at least one aromatic group. Ingredient (Q) can be a single resin or a combination comprising two or more resins that differ in at least one of the following properties: structure, viscosity, average molecular weight, siloxane units, and sequence.

### Ingredient (R)

Ingredient (R) is represented by average compositional formula (VIII) R¹¹ᵤR¹²ᵥSiO_{(4-u-v)/2} where each R¹¹ is independently an aliphatically unsaturated organic group, such as an alkenyl group with 2 to 10 carbon atoms, that can be the same as the groups exemplified for R⁹, and each R¹² is independently a substituted or unsubstituted monovalent hydrocarbon group other than R¹¹ that can be the same as the groups listed for R¹⁰. At least 10 mole % of R¹² may comprise aromatic groups such as phenyl groups, while the remaining groups may comprise alkyl groups. Alternatively, each R¹² may comprise a phenyl group. Alternatively, each R¹² may comprise a methyl group or a phenyl group. Without wishing to be bound by theory it is thought that when each R¹² is a methyl group or a phenyl group, affinity between ingredients (Q) and (S) in the composition may be improved and resistance to heat and transparency in an article, such as a lens or lightguide, prepared by curing the composition may be improved.

In formula (VIII), u designates an average number of aliphatically unsaturated groups per silicon atom in ingredient (R) and may have a value ranging from 0.60 to 0.80. In formula (VIII), v designates an average number of substituted or unsubstituted monovalent hydrocarbon groups (other than R¹¹) per 1 silicon atom in ingredient (R) may have a value ranging from 1.50 to 2.10, alternatively 1.50 to 2.00.

Alternatively, ingredient (R) may comprise an aliphatically unsaturated organooligosiloxane of formula (X): (R¹⁵R¹⁶₂SiO)_{y} SiR¹⁶_{(4-y)}, where each R¹⁵ is as described above and may be the same as those listed above for R⁹. In the above formula, each R¹⁶ is independently a substituted or unsubstituted monovalent hydrocarbon group (other than R¹⁵) where R¹⁶ may be a group that is the same as those listed above for R¹⁰. Alternatively, each R¹⁶ may comprise a phenyl group. Alternatively, each R¹⁶ may comprise a phenyl group or a methyl group. Subscript y is 2 or 3. To facilitate dissolving ingredient (Q) (when ingredient (Q) is a solid) or to reduce viscosity of ingredient (Q) (when ingredient (Q) is viscous) at room temperature, ingredient (R) may be liquid at room temperature and have viscosity at 25°C below 10 Pa·s, alternatively viscosity ranging from 1 mPa·s to 100 mPa·s.

Specific examples of ingredient (R) are methylphenylvinyloligosiloxanes shown by the following siloxane unit formulae and average compositional formulae:
(i) Unit formula (ViMe₂SiO)₃SiPh, which has average compositional formula Vi0.₇₅Me_{1.50}Ph_{0.25}SiO_{0.75}, where u =0.75, v =1.75, ph/R^{12'} (mole%) = 14;
(ii) Unit formula (ViMe₂SiO)₂SiPh₂, which has average compositional formula Vi_{0.67}Me_{1.33}Ph_{0.67}SiO_{0.67}, u =0.67, v =2.0, Ph/ R^{12'} (mole%) = 33;
(iii) Unit formula (ViMePhSiO)₃SiPh, which has average compositional formula Vi_{0.75}Me_{0.75}Ph_{1.00}SiO_{0.75}, u =0.75, v =1.75, Ph/R^{12'} (mole%) = 57;
(iv) Unit formula (ViMePhSiO)₂SiPh₂, which has average compositional formula Vi_{0.67}Me_{0.67}Ph_{1.33}SiO_{0.67}, u =0.67, v =2.00, Ph/R^{12'} (mole%) = 67; and
(v) Unit formula (ViMe₂SiO)₂SiMePh, which has average compositional formula Vi_{0.67}Me_{1.67}Ph_{0.33}SiO_{0.67}, u =0.67, v =2.00,
   Ph/R^{12'} (mole%) = 17.
where R^{12'} represents total mole quantity of Me and Ph. Ingredient (R) may be a single organooligosiloxane or a combination comprising two or more components differing in at least one of the following properties molecular weight, siloxane units, structure, and sequence.

### Ingredient (S)

Ingredient (S) represented by average compositional formula (IX) above comprises an organohydrogenoligosiloxane or organohydrogenpolysiloxane. Silicon-bonded hydrogen atoms of this component participate in an addition reaction with aliphatically unsaturated silicon-bonded organic groups of ingredients (Q) and (R).

In average compositional formula (IX) at least 20 mole % of R¹³ comprise aromatic groups such as phenyl groups. Groups R¹³ may be the same as those listed above for R¹⁰, alternatively, each R¹³ may be a phenyl group, alternatively, each R¹³ may be selected from a methyl group and a phenyl group. In formula (IX), subscript w indicates number of silicon-bonded hydrogen atoms per one silicon atom of ingredient (S) and may range from 0.35 to 0.65; subscript x indicates an average number of substituted or unsubstituted monovalent hydrocarbon groups (other than R⁹) per one silicon atom of ingredient (S) and may range from 0.90 to 1.70, alternatively 1.30 to 1.70. At 25 °C, ingredient (S) may be solid or liquid, but the liquid form may facilitate preparation of the composition. Viscosity of ingredient (S) may be up to 100 Pa·s, alternatively viscosity may range from 1 to 1,000 mPa·s.

Examples of ingredient (S) include but are not limited to methylphenylhydrogenoligosiloxanes and methylphenylhydrogenpolysiloxanes shown by the following siloxane unit formulae and average compositional formulae:
(i) Unit formula (HMe₂SiO_{1/2})_{0.65}(PhSiO_{3/2})_{0.35}, which has average compositional formula H_{0.65}Me_{1.30}Ph_{0.35} SiO_{0.85}, w =0.65, x =1.65, Ph/R^{15'} (mole%) = 21;
(ii) Unit formula (HMe₂SiO_{1/2})_{0.60}(PhSiO_{3/2})_{0.40}, which has average compositional formula H_{0.60}Me_{1.2}Ph_{0.40} SiO_{0.90}, w =0.60, x =1.60, Ph/ R^{15'} (mole%) = 25;
(iii) Unit formula (EMe₂SiO_{1/2})_{0.40}(PhSiO_{3/2})_{0.60}, which has average compositional formula H_{0.40}Me_{0.80}Ph_{0.60} SiO_{1.10}, w =0.40, x =1.40, Ph/ R^{15'} (mole%) = 43;
(iv) Unit formula (HMe₂SiO_{1/2})_{0.35}(PhSiO_{3/2})_{0.65}, which has average compositional formula H_{0.35}Me_{0.70}Ph_{0.65}SiO_{1.15}, w =0.35, x =1.05, Ph/R^{15'} (mole%) = 48;
(v) Unit formula (HMeSiO_{2/2})_{0.65}(PhSiO_{3/2})_{0.35}, which has average compositional formula H_{0.65}Me_{0.65}Ph_{0.35}SiO_{1.175}, w =0.65, x =1.00, Ph/ R^{15'} (mole%) = 35;
(vi) Unit formula (HMe₂SiO_{2/2})_{0.50}(PhSiO_{3/2})_{0.50}, which has average compositional formula H_{0.5}Me_{0.50}Ph_{0.50} SiO_{1.25}, w =0.50, x =1.00, Ph/ R^{15'} (mole%) = 50;
(vii) Unit formula (HMeSiO_{2/2})_{0.35}(PhSiO_{3/2})_{0.65}, which has average compositional formula H_{0.35}Me_{0.35}Ph_{0.65} SiO_{1.325}, w =0.35, x =1.00, Ph/ R^{15'} (mole%) = 65;
(viii) Unit formula (HMePhSiO_{1/2})_{0.60}(PhSiO_{3/2})_{0.40}, which has average compositional formula H_{0.60}Me_{0.60}Ph_{1.00} SiO_{0.90}, w =0.60, x =1.60, Ph/ R^{15'} (mole%) = 63; and
(ix) Unit formula (HMePhSiO_{1/2})_{0.40}(PhSiO_{3/2})_{0.60}, which has average compositional formula H_{0.4}Me_{0.40}Ph_{1.00} SiO_{1.10}, w =0.40, x =1.40, Ph/ R^{15'} (mole%) = 71.
In these formulae, R^{15'} represents total quantity of Me and Ph. Ingredient (S) may be a combination comprising two or more components differing in at least one of the following properties molecular weight, siloxane units, structure, and sequence.

Ingredients (R) and (S) may be used in a combined amount of 10 to 50 parts by weight, alternatively 20 to 100 parts by weight, per 100 parts by weight of ingredient (Q). To provide hardness and physical properties in a cured silicone resin prepared by curing this addition-curable organopolysiloxane resin composition, the amount of silicon-bonded hydrogen atoms of ingredient (S) per mole of alkenyl groups in ingredients (Q) and (R) may range from 0.5 to 3 moles, alternatively 0.7 to 2.0 moles.

### Ingredient (D)

Ingredient (D) is a hydrosilylation catalyst as described above. The exact amount of ingredient (D) in this addition-curable organopolysiloxane resin composition depends on various factors including the exact ingredients (Q), (R), (S), and (D) selected, and any additional ingredients, if present. However, the amount of ingredient (D) may range from 1 to 500 ppm, alternatively 2 to 100 ppm, based on the combined weights of ingredients (Q), (R), and (S).

One or more additional ingredients may be added to the addition-curable organopolysiloxane resin composition comprising ingredients (Q), (R), (S), and (D) described above. These optional ingredients include ingredients (E) to (P), or a combination thereof, as described above. Ingredient (F), a mold release agent, may be added to this addition-curable organopolysiloxane resin composition. The amount of mold release agent in this composition may range from 0.2 % to 2 %, alternatively 0.25 % to 0.75 %, based on the weight of the composition.

The addition-curable organopolysiloxane resin composition can be prepared by mixing ingredients (Q), (R), (S), and (D) and any additional ingredients, if present. If a one part composition will be prepared, pot life of the composition may be extended by adding an inhibitor, such as ingredient (E) described above. If the addition-curable organopolysiloxane resin composition will be used in a molding process, such as that described at paragraphs [0020] to [0024] above, then ingredient (F) may be added. Alternatively, a multiple-part composition may be prepared by mixing ingredients comprising (Q), (R), and (D) in one part and mixing components comprising (Q), (R) and (S) in a separate part, storing each part in a premixed state, and mixing the parts together just prior to use.

The addition-curable organopolysiloxane resin composition cures to form an article having a hardness of 60 to 100 at 25°C and hardness of 40 to 100 at 150°C, as measured by Type D durometer in accordance with ASTM D2240-86. Alternatively, the cured silicone resin obtained from the addition-curable organopolysiloxane resin composition has hardness ranging from 40 to 100, alternatively 40 to 60, as measured in accordance with ASTM D2240-86 by the type D durometer. ASTM D2240-86 corresponds to JIS K 7215-1986 that specifies testing methods for durometer hardness of plastics.

The addition-curable organopolysiloxane resin composition may be a liquid at room temperature. However, to improve moldability and flowability, the composition may have viscosity at 25 °C below 5,000 Pa·s, alternatively viscosity may range from 10 to 1,000 Pa·s, alternatively viscosity may range from 100 to 3,000 cps at molding temperatures. The addition-curable organopolysiloxane resin composition may be gradually cured by retaining it at room temperature or rapidly cured by heating. The composition may be cured alone or in contact with another material, to form an integrated body with the other material (e.g., overmolding and co-molding).

### Optical Devices

The processes and silicone compositions described above may be used to fabricate various optical devices. For example, such optical devices include, but are not limited to optical waveguides, lightguides, light sensing elements, and LED packages such HB LED packages., *e.g*., LED package lenses.

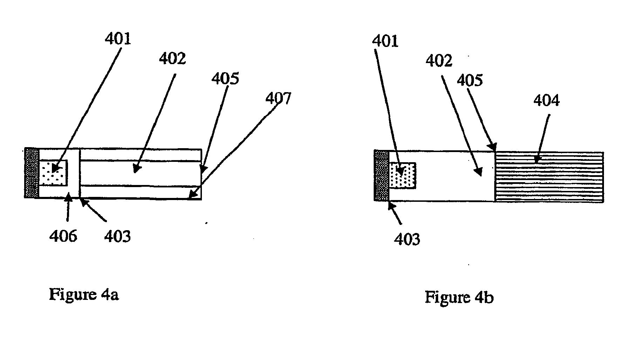

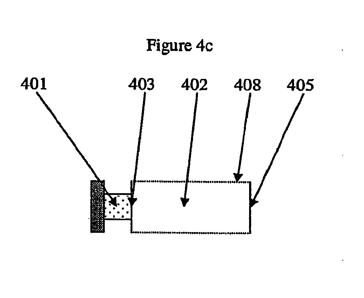

The lightguide prepared using the processes and compositions described above may be fabricated by itself or as part of another device. The device may further comprise a light source, such as an LED or HB LED, coupled to the inlet of the lightguide. The device may further comprise another optical device, such as an organic lightguide or a lens at the outlet of the lightguide. For example, figures 4a, 4b, and 4c show an optical device comprising an LED 401 and a lightguide 402 prepared from a silicone composition described above. The lightguide 402 may be coupled to the LED 401 by simply placing the LED 401 adjacent to the lightguide 402 such that light from the LED 401 enters the inlet 403 of the lightguide 402 as shown in Figure 4a. Any gap between the LED 401 and the inlet 403 of the lightguide 402 may optionally be filled with air or an optical coupling agent 406, such as a gel or elastomer. The lightguide 402 may optionally further comprise a clad 407 surrounding a surface of the lightguide 402. The clad may have an RI lower than the RI of the lightguide 402.

Alternatively, the LED 401 may be integrated with the lightguide 402 such that the silicone composition described above cures to form the lightguide 402 while in contact with the LED 401, as shown in Figure 4b. The optical device may further comprise an organic lightguide 404 coupled to the outlet 405 of the lightguide 402 fabricated from the cured silicone resin. Without wishing to be bound by theory, it is thought that using a lightguide 402 coupled to the LED 401 improves stability of the optical device, while using an organic lightguide 404 coupled to the outlet 405 of the lightguide 402 reduces cost of the resulting optical device because organic lightguides 404, such as PMMA, PC, and COC lightguides may be less expensive to fabricate than the lightguides 402 fabricated from cured silicone resin, however, organic lightguides 404 suffer from the drawback of deteriorating when coupled to the LED 401 without a lightguide 402 fabricated from cured silicone resin due to poorer stability of the organic materials of construction as compared to a cured silicone resin prepared by curing a silicone composition described herein. Alternatively, the LED 401 may be coupled to the inlet 403 of the lightguide 402 by butt-coupling, as shown in Figure 4c. At least one surface 408 of the lightguide 402 may be treated to affect internal reflection. For example, a surface 408 of the lightguide 402 may be partially or fully mirrored to improve internal reflection. Alternatively a surface 408 of the lightguide 402 may be partially or fully roughened.

One skilled in the art would recognize that the lightguides shown in figures 4a, 4b, and 4c are exemplary and not limiting. The lightguide may have multiple configurations depending on various factors including the light source to be coupled with the lightguide and the application in which the lightguide will be used. For example, the lightguide may comprise a bar or cylinder shape. The silicone compositions and processes described herein may be used to fabricate the lightguides disclosed, for example, in U.S. Patents 5,594,424; 5,673,995; 6,174,079; 6,568,822; U.S. Published Patent Applications US 2005/0213341 and US 2006/0105485; and PCT Publications WO2005/033207 and WO2006/033375.

The ingredients of the silicone composition described above may be selected such that a lightguide prepared by curing the silicone composition has desired properties for a given application. The lightguide may be used, for example, in backlighting units for displays, vehicle lighting, and message board applications. When the lightguide will be used in these applications, the lightguide may have a hardness as measured by durometer Shore A of at least 50, alternatively at least 60. The lightguide may have an optical clarity greater than 50 %, alternatively 50 % to 100 % in a section having thickness ranging from 1.5 mm to 4 mm. For some automotive headlamp applications, the lightguide may be non-yellowing when exposed to UV radiation. The lightguide may have transmission loss not greater than 20 %, alternatively 15 %, when heated at 150°C for at least 7 days, alternatively 7 to 60 days (again in a section having thickness ranging from 1.5 mm to 4 mm). The RI of the lightguide may range from 1.46 to 1.57. The RI of the core, if present is less than the RI of the clad. RI may be adjusted by changing amount of aromatic groups (*e.g.,* phenyl) and nonaromatic groups (*e.g.*, methyl) in the ingredients of the silicone composition used to make the lightguide. When an organic lightguide will be coupled, the RI of the lightguide fabricated from cured silicone resin may be matched to the RI of the organic lightguide. For example, a PMMA lightguide may have RI 1.49, while a PC lightguide may have RI 1.57.

Alternatively, a molded shape other than a lightguide may be prepared by the molding process described above at paragraphs [0020] to [0024]. The molded shape may be, for example, a lens for use in an LED package such as a flat lens, a curved lens, or a fresnel lens. Curved and fresnel lenses made from an amount of silicone composition ranging from 10 milligrams (mg) to 60 grams (g) may be fabricated. The lenses may have a width or diameter ranging from 0.1 mm to 10 mm. The lenses may have thickness ranging from 0.05 mm to 2 mm. For lenses having thickness of 2 mm, optical transmission at 400 nanometers (nm) to 650 nm may be 85 % transmission to 100 % transmission.

Alternatively, the silicone composition and process described above at paragraph [0019] may be used for packaging optoelectronic devices, such as LED devices. For example, a silicone composition may be molded and cured such that the cured silicone resin is formed as a hard lens. The lens may be tack free and resistant to dirt pick up. The silicone composition may be used to form lenses in, for example, an injection molding process such as that disclosed in WO 2005/017995.

Alternatively, the silicone composition and process may be used to encapsulate an LED device, such as that disclosed in U.S. Patent 6,204,523 or WO 2005/033207. Figure 5 shows a cross section of an LED device with a cured silicone resin prepared from the silicone composition described above. The LED device includes an LED chip 504 encapsulated in a soft silicone 503, such as a rubber or gel. The LED chip 504 is bonded to lead frame 505 by wire 502. The LED chip 504, wire 502, and soft silicone 503 are surrounded by dome 501, which is made of a cured silicone resin.

### Example

These examples are intended to illustrate the invention to one of ordinary skill in the art and should not be interpreted as limiting the scope of the invention set forth in the claims.

### Example 1- Fabricating Curved Lenses

Curved lenses are fabricated according to the process of this invention using the injection molding equipment in Figure 1 and the mold in Figures 2 and 3. The mold is heated at a temperature (°C) shown in Table 1. An addition curable organopolysiloxane resin composition is fed through the static mixer 104 to the extruder 105 and a quantity of the resulting curable organopolysiloxane resin composition (cubic inches, cin) is fed to the assembly 110. The quantity is shown in Table 1. This quantity of curable organopolysiloxane resin composition comprises: 82.5 parts D^{Vi}₁₀D₁₅T^{Ph}₇₅, 10 parts M^{Vi}D^{Ph2}, 10 parts M^{Vi}₃T^{Ph}, M^{H}₆₀, T^{Ph}₄₀, 0.013 parts platinum catalyst and 0.10 parts platinum catalyst inhibitor of formula HC≡C-C(Me)₂-O₃SiMe; where the subscript represents the number of siloxane units and the superscript represents any monovalent radicals bonded to silicon other than methyl.

The quantity of curable organopolysiloxane resin composition is injected intro the mold 106 and the resulting composition is injected into the mold cavities 201 in stages. The injection pressure (pounds per square inch, psi), the injection speed (cubic inches per second, cins) and volume injected (cin) in each stage are shown in Table 1. The back pressure (psi) and screw speed (circumferential speed in feet per minute, fpm) applied during injection are also shown in Table 1.

The composition is then held in the mold at a pressure and for a time shown in Table 1. The starting pressure in holding stage 1 (shown in Table 1) is gradually reduced to the pressure in holding stage 2 during the time for holding stage 1. The composition is then held under the conditions in holding stage 2. The composition is then cured for a time shown in Table 1 until the resulting lens is hardened sufficiently to be removed from the mold. The lenses are then de-molded. Visual evaluation of the curved lenses is recorded in Table 1. Example 1 shows that acceptable curved lenses can be fabricated using the composition at various molding process conditions.

### Example 2 - Fabricating Curved Lenses

Curved lenses are fabricated according to the procedure in Example 1 using the process parameters in Table 2. The curable organopolysiloxane resin composition in Example 2 comprises 82.5 parts T^{Ph}_{0.75}Q_{0.10}M^{Vi}_{0.15}, 8.9 parts Ph₂Si(OSiMe₂H)₂, 5.9 parts PhSi(OSiMe₂H)₃, 1.01 parts bis-diphenylphosphino propane, and 5 parts per million (ppm) platinum catalyst. Comparative runs 1-4 show that incomplete fill can result with some formulations when the quantity supplied is too low, when back pressure is too low, or both. Runs 5-18 show that acceptable molded parts can be made at a variety of process conditions.

### Example 3 - Fabricating Curved Lenses

Curved lenses are fabricated according to the procedure in Example 1 using the process parameters in Table 3. The organopolysiloxane resin composition in Example 3 comprises 67.5 parts DOW CORNING® SYLGARD® 184 Part A, 9.5 parts DOW CORNING® SYLGARD® 184 Part B, 9.01 parts Si(SiMe₂CH=CH₂)₄, MD_{3.2}DH_{5.8}M, and 13.9 parts MD_{3.2}D^{H}_{5.8}M. Comparative runs 1-7 do not make acceptable lenses due to air entrained in the feed system. Runs 8-13 make acceptable lenses even though bubbles are present. As the composition was processed and entrained air was removed, lens quality improved in this example.

### Example 4 - Fabricating Curved Lenses with Vertical Mold Orientation

Curved lenses are fabricated according to the process of this invention using the injection molding equipment in Figure 1 and the mold in Figures 2 and 3, except that the mold orientation is changed from horizontal to vertical. The two part addition curable organopolysiloxane resin composition in Example 4 comprises 65 %T^{Ph}_{0.75}M^{Vi}_{0.25}, 21.6% T^{Ph}_{0.75}Q_{0.01}M^{Vi}_{0.25}, 12% HMe₂SiØSiMe₂H, 0.4 % [Vi(Ph, Me)Si-O]₂, 26 ppm triphenyl phosphine inhibitor, and 5 ppm platinum catalyst, where Ø represents a phenylene group. The molding process conditions and results are in Table 4. Example 4 shows that changing from a horizontal to a vertical mold orientation without changing the vents to the top is less effective than a horizontal mold orientation using this equipment and this silicone encapsulant composition under certain molding process parameters.

### Examples 5 - Fabricating Curved Lenses

Curved lenses are fabricated according to the procedure in Example 1 using the process parameters in Table 5. The two part addition curable organopolysiloxane resin composition in Example 5 comprises 39.7 parts T^{Ph}.₇₅M^{Vi}_{0.25}, 13.3 parts T^{Ph}.₇₅Q_{0.10}M^{Vi}_{0.25}, 34.8 parts M^{Vi}D^{Ph}₂₂₀M^{Vi}, 4.3 parts SiPh₂(OSiMe₂H)₂, 5.9 parts SiPh(OSiMe₂H)₃, 22 ppm triphenyl phosphine inhibitor, and 3 ppm platinum catalyst. Example 5 shows that acceptable lenses may be fabricated from the compositions at a variety of molding process parameters in runs 1-6 and 9-18. Runs 7 and 8 did not produce acceptable lenses because the thermal history of the organopolysiloxane resin caused the molded lens to be yellow.

### Example 6 - Fabricating Curved Lenses

Curved lenses are fabricated according to the procedure in Example 1 using the process parameters in Table 6. The two part addition curable organopolysiloxane resin composition in Example 6 comprises 51.5 parts D^{Vi}₁₀D₁₅T^{Ph}₇₅, 10 parts M^{Vi}D^{Ph2}, 10 parts M^{Vi}₃T^{Ph}, 28.4 parts M^{H}₆₀T^{Ph}₄₀, 0.013 parts platinum catalyst, and 0.10 parts inhibitor of formula (HC≡C-C (Me)₂-O)₃SiMe. Example 6 shows that good curved lenses can be fabricated from the composition at a variety of molding process conditions.

### Example 7 - Fabricating Curved Lenses

Curved lenses are fabricated according to the procedure in Example 1 using the process parameters in Table 7. The two part addition curable organopolysiloxane resin composition in Example 7 comprises 39.7 parts T^{Ph}_{.75}M^{Vi}_{0.25}, 15.3 parts T^{Ph}_{.75}Q_{0.10} M^{Vi}_{0.25}, 34.8 parts M^{Vi}D^{Ph}₂₂₀M^{Vi}, 4.3 parts SiPh₂(OSiMe₂H)₂, 5.9 parts SiPh(OSiMe₂H)₃, 22 ppm triphenyl phosphine inhibitor, and 3 ppm platinum catalyst. Example 7 shows that good curved lenses can be fabricated from the composition at a variety of molding process conditions.

### Example 8 - Fabricating Fresnel Lenses

Fresnel lenses are fabricated according to the process of this invention using the injection molding equipment in Figure 1 and a fresnel lens mold. The mold is heated to a temperature (°C) shown in Table 8. A two part addition curable organopolysiloxane resin composition is fed through the static mixer 104 to the extruder 105 and a quantity of the resulting curable organopolysiloxane resin composition is fed to the assembly 110. This curable organopolysiloxane resin composition is the same as in Example 6.

The curable organopolysiloxane resin composition is injected into the mold cavities 201 in stages. The injection pressure (psi), the injection speed (cubic inches per second, cins) and volume injected (cin) in each stage are shown in Table 8. The back pressure (psi) and screw speed (feet per minute, fpm) applied during injection are also shown in Table 8.

The composition is then held in the mold at pressures and for times shown in Table 8. The starting pressure in holding stage 1 (shown in Table 8) is gradually reduced to the pressure in holding stage 2 during the time for holding stage 1. The composition is then held under the conditions in holding stage 2. The composition is then cured for a time shown in Table 8 until the resulting shape is hardened sufficiently to be removed from the mold. The lenses are then de-molded. Visual evaluation of the curved lenses is recorded in Table 8. Example 8 shows that curing the composition used in example 8 too long or at too high a temperature may cause the molded lenses to become thin or brittle, or to make demolding somewhat difficult, however, acceptable lenses are made under process conditions in example 8.

### Example 9 - Fabricating Fresnel Lenses

Fresnel lenses are fabricated according to the procedure in Example 8 using the process parameters in Table 9. Example 9 shows that acceptable fresnel lenses can be made with this equipment and this curable silicone encapsulant composition by adjusting the molding process parameters. Comparative runs 1 to 8 show that a larger quantity is needed for these process conditions to completely fill the mold without over filling and obtaining molded lenses with flash. Runs 9 to 15 produce acceptable lenses.

### Example 10 - Effect of Applying Mold Release Agent to Mold Cavity

Curved lenses are fabricated according to the process of Example 1 except that a mold release agent is applied to the surface of the mold cavities at the beginning of the process. The mold release agent is a TEFLON® spray. The curable organopolysiloxane resin composition in Example 10 comprises 51 parts D^{Vi}10D₁₅T^{Ph}₇₅, 10 parts M^{Vi}D^{Ph2}, 10 parts M^{Vi}₃T^{Ph}, 28.4 parts M^{H}₆₀T^{Ph}₄₀, 0.5 parts M[D^{Ph,Me}D]₃M, 0.013 parts platinum catalyst, and 0.10 parts (HC≡C-C (Me)₂-O)₃SiMe inhibitor. The molding process parameters and results are in Table 10.

### Example 11 - Effect of Adding Mold Release Agent to the Addition Curable Organopolysiloxane Resin composition

Example 10 is repeated except that the TEFLON® spray is eliminated and 0.5 % of trimethylsiloxy-terminated (dimethylsiloxane/phenylmethylsiloxane) copolymer having a viscosity of 100 to 150 cps at 25 °C is added to the composition. Examples 10 and 11 show that before an internal mold release agent is added to the composition of Example 10, 33 to 100 % of the curved lenses may crack when being removed from the mold, even when a mold release agent is applied to the mold cavity. However, when the internal mold release agent is added, after 15 molding cycles, release becomes easier, and after 25 cycles cracking may reduce to zero. Without wishing to be bound by theory, it is thought that the internal mold release agent used in this example conditions the mold over time.

### Examples 12 and 13 - Effect of Adding Mold Release Agent to the Addition Curable Organopolysiloxane Resin Composition

Examples 10 and 11 are repeated except that in example 13, the TEFLON® spray is eliminated and a mold release agent is added to the composition. The composition used in example 12 comprises 51.5 parts D^{Vi}₁₀D₁₅T^{Ph}₇₅, 10 parts M^{Vi}D^{Ph2}, 10 parts M^{Vi}₃T^{Ph}, 28.4 parts M^{H}₆₀T^{Ph}₄₀, 0.013 parts platinum catalyst, and 0.10 parts inhibitor (HC≡C-C (Me)₂-O)₃SiMe; and the composition used in example 13 comprises 51 parts D^{Vi}₁₀D₁₅T^{Ph}₇₅, 10 parts M^{Vi}D^{Ph2}, 10 parts M^{Vi}₃T^{Ph}, 28.4 parts M^{H}₆₀T^{Ph}₄₀, 0.5 parts HO[Si(Ph,Me)O]₄₋₇H, 0.013 parts platinum catalyst, and 0.1 parts (HC≡C-C (Me)₂-O)₃SiMe inhibitor.

The molding conditions used in each run in examples 12 and 13 are as follows: mold temperature 150 C, quantity 0.345 cin, back pressure -150 psi, screw speed of 25, injection stage 1 pressure/speed/volume of 3000/0.6/0.16, injection stage 2 pressure/speed/volume of 2500/0.1/0.09, holding stage 1 pressure/time of 2500/10 and holding stage 2 of 1200/10, and cure time of 30 seconds. Tables 12 and 13 show the results of examples 12 and 13, respectively. Without wishing to be bound by theory, it is thought that the internal mold release agent in example 13 conditions the mold over time.

### Example 14 - No Mold Release Agent

Example 12 is repeated except that the composition comprises 51.5 parts D^{Vi}₁₀D₁₅T^{Ph}₇₅, 10 parts M^{Vi}D^{Ph2}, 10 parts M^{Vi}₃T^{Ph}, 28.4 parts M^{H}₆₀T^{Ph}₄₀, 0.013 parts platinum catalyst, and 0.10 parts inhibitor (HC≡C-C (Me)₂-O)₃SiMe.

### Example 15 - Yellowing

A silicone composition as described above and comprising ingredients (A), (B), (C), (D), and (E) was prepared and cured. For comparison PC from Bayer and cyclo olefin copolymer (COC) from Zeon Chemicals and having the tradename TOPAZ® were cured. Thermal discoloration was measured visually and on the Gardner color scale according to ASTM D1544. The silicone and PC samples were 5 mm thick slabs. The COC sample was lens. The results are in Table 14.

### Examples 16 -17

In these examples, M^{Vi}₂D^{Ph,Me}_{cc} is dimethyl,vinyl siloxy-terminated methyl, phenyl siloxane, with a viscosity ranging from 500 to 50,000 cSt and subscript cc ranging from 50 to 500. Alternatively, viscosity may range from 2,000 to 25,000 cSt, and cc may range from 100 to 250. M^{Vi}_{0.25}T^{Ph}_{0.75} is a solution of 45 parts toluene and 55 parts vinyl terminated phenylsilsesquioxane resin. The resin is a solid. M^{H}_{0.6}T^{Ph}_{0.4} is a mixture of 98 parts hydrogen-terminated phenylsilsesquioxane and 2 parts phenyltris(dimethylhydrogensiloxy)silane with a viscosity ranging from 1 to 100 mPa·s. Mold Release Agent is hydroxy-terminated methyl, phenyl polysiloxane of formula: 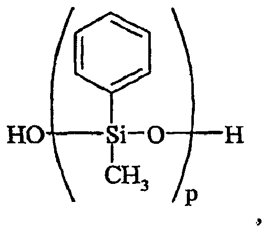 where p is an integer ranging from 3 to 10. Pt is a mixture of 38 parts tetramethyldivinyldisiloxane and 62 parts 1,3-diethenyl-1,1,3,3 - tetramethyldisiloxane complexes with platinum. Etch is 1-ethynyl-1-cyclohexanol. Inhibitor is methyl(tris(1,1-dimethyl-2-propynyloxy))silane.

### Example 16 - Effect of Inhibitor

A sample was prepared by mixing the following ingredients: 54 parts M^{Vi}_{0.25}T^{Ph}_{0.75}, 24 parts M^{Vi}₂D^{Ph,Me}_{cc}, 21 parts M^{H}_{0.6}T^{Ph}_{0.4}, 1 part Mold Release Agent, 2 parts Pt, and 750 parts per million Etch. The sample was cured by heating at 200 °C to form 1.8 mm thick specimens. The specimens were aged at 200 °C for up to 14 days, and per cent transmission at 400 nm was measured at various times. The results are in Table B.

### Example 17 -Effect of Inhibitor

A sample was prepared by mixing the following ingredients: 54 parts M^{Vi}_{0.25}T^{Ph}_{0.75}, 24 parts M^{Vi}₂D^{Ph,Me}_{cc}, 21 parts M^{H}_{0.6}T^{Ph}_{0.4}, 1 part Mold Release Agent, 2 parts Pt, and 250 parts per million Inhibitor. The sample was cured by heating at 200 °C to form 1.8 mm thick specimens. The specimens were aged at 200 °C for up to 14 days, and per cent transmission at 400 nm was measured at various times. The results are in Table B.

Example 17 and example 16 show that the silicone composition described above comprising ingredients (A), (B), (C), (D), (E), and (F) may be used to prepare a cured silicone resin with an optical transparency > 95% at a thickness of 1.8 mm at 400 nm wavelength after heating at 200°C for 14 days. Example 16 shows that conventional organic acetylenic alcohol inhibitors for hydrosilylation curable silicone compositions, such as 1-ethynyl-1-cyclohexanol, may be unsuitable for preparing cured silicone resins with an optical transparency > 95% at a thickness of 1.8 mm at 400 nm wavelength after heating at 200°C for 14 days.

### Industrial Applicability

Silicone compositions are useful for fabrication of optical devices such as lightguides and LED packages. Cured silicone resins such as silicone encapsulants prepared by curing these compositions may provide the benefits of enhanced light transmission, enhanced reliability, and increased lifetimes of LED packages. Silicone encapsulants may exhibit superior performance over epoxy encapsulants in temperature and humidity resistance in LED applications. The silicone compositions and processes may be used to prepare cured silicone resins having geometries including, but not limited to, cylindrical, rectangular, simple convex lenses, patterned lenses, textured surfaces, domes, and caps. In optical device applications the encapsulants may be pre-manufactured by molding (injection or transfer) or casting processes. Alternatively, a process for molding over an optical device assembly, called 'overmolding' or "insert molding" on a rigid or flexible substrate may also be performed using the silicone compositions described herein. The lightguide described above may be used to transmit light from a light source to a viewing surface by internal reflection. Such applications include backlighting units for displays, vehicle lighting, and message board applications.

**Table 1**

| | | | | | Injection Stage 1 | | | Injection Stage 2 | | | Holding Stage 1 | | Holding Stage 2 | | Cure | |
|---|---|---|---|---|---|---|---|---|---|---|---|---|---|---|---|---|
| Run | Mold Temp. | Quantity (cin) | Back Pressure | Screw Speed | Pressure | Speed | Volume | Pressure | Speed | Volume | Pressure | Time | Pressure | Time | Time | Performance |
| 1 | 100 | 0.2975 | -200 | 35 | 2700 | 0.2 | 0.18 | 2450 | 0.04 | 0.09 | 2300 | 8 | 1700 | 4.5 | 60 | SB |
| 2 | 100 | 0.2975 | -200 | 35 | 2700 | 0.2 | 0.18 | 2450 | 0.04 | 0.09 | 2300 | 8 | 1700 | 4.5 | 60 | SB |
| 3 | 100 | 0.3050 | -200 | 35 | 2700 | 0.2 | 0.18 | 2450 | 0.04 | 0.09 | 2300 | 8 | 1700 | 4.5 | 45 | SB |
| 4 | 115 | 0.3050 | -200 | 35 | 2700 | 0.2 | 0.18 | 2450 | 0.04 | 0.09 | 2300 | 8 | 1700 | 4.5 | 45 | SB |
| 5 | 115 | 0.3050 | -200 | 35 | 2700 | 0.2 | 0.18 | 2450 | 0.04 | 0.09 | 2300 | 8 | 1700 | 4.5 | 35 | SB |
| 6 | 115 | 0.3050 | -200 | 35 | | 0.2 | 0.18 | 2450 | 0.04 | 0.09 | 2300 | 8 | 1700 | 4.5 | 35 | SB |
| 7 | 115 | 0.3050 | -300 | 35 | 2700 | 0.2 | 0.18 | 2450 | 0.06 | 0.09 | 2300 | 8 | 1700 | 4.5 | 30 | SB |
| 8 | 115 | 0.3100 | -300 | 35 | 2700 | 0.2 | 0.18 | 2450 | 0.06 | 0.09 | 2300 | 8 | 1700 | 4.5 | 30 | SB |
| 9 | 115 | 0.3100 | -300 | 35 | 2700 | 0.2 | 0.18 | 2450 | 0.06 | 0.09 | 2300 | 8 | 1700 | 4.5 | 30 | SB |
| 10 | 115 | 0.3100 | -350 | 35 | 2700 | 0.2 | 0.18 | 2450 | 0_{.}06 | 0.09 | 2300 | 8 | 1700 | 4.5 | 30 | SB |
| 11 | 115 | 0.3100 | -350 | 35 | 2700 | 0.2 | 0.18 | 2450 | 0.07 | 0.09 | 2300 | 8 | 1700 | 4.5 | 30 | SB |
| 12 | 115 | 0.3100 | -400 | 35 | 2700 | 0.2 | 0.18 | 2450 | 0.07 | 0.09 | 2300 | 8 | 1700 | 4.5 | 30 | SB |
| 13 | 115 | 0.3100 | -400 | 35 | 2700 | 0.22 | 0.18 | 2450 | 0.08 | 0.09 | 2300 | 8 | 1700 | 4.5 | 29 | SB |
| 14 | 115 | 0.3100 | -450 | 15 | 2700 | 0.22 | 0.18 | 2450 | 0.08 | 0.09 | 2300 | 8 | 1700 | 4.5 | 29 | SB |
| 15 | 115 | 0.3100 | -450 | 15 | 2700 | 0.22 | 0.18 | 2450 | 0.08 | 0.09 | 2300 | 8 | 1700 | 4.5 | 29 | SB |
| 16 | 115 | 0.3100 | -450 | 15 | 2800 | 0.23 | 0.12 | 2450 | 0.08 | 0.09 | 2300 | 8 | 1700 | 4.5 | 29 | SB |
| 17 | 115 | 0.3100 | -450 | 5 | 2800 | 0.23 | 0.12 | 2450 | 0.08 | 0.09 | 2300 | 8 | 1700 | 4.5 | 29 | SB |
| 18 | 115 | 0.3100 | -450 | 5 | 2800 | 0.23 | 0.12 | 2450 | 0.08 | 0.09 | 2300 | 8 | 1700 | 4.5 | 29 | SB |
| 19 | 115 | 0.3300 | -450 | 5 | 2900 | 0.25 | 0.16 | 2450 | 0.06 | 0.09 | 2300 | 8 | 1700 | 4.5 | 29 | SB |
| 20 | 115 | 0.3300 | -450 | 5 | 2900 | 0.25 | 0.16 | 2450 | 0.06 | 0.09 | 2300 | 8 | 1700 | 4.5 | 29 | SB |
| 21 | 115 | 0.3300 | -450 | 5 | 2900 | 0.25 | 0.16 | 2450 | 0.06 | 0.09 | 2300 | 8 | 1700 | 4.5 | 29 | SB |
| 22 | 115. | 0.3300 | -450 | 5 | 2900 | 0.25 | 0.16 | 2300 | 0.06 | 0.09 | 2200 | 8 | 1700 | 4.5 | 29 | SB |
| 23 | 115 | 0.3300 | -450 | 5 | 2900 | 0.25 | 0.16 | 2300 | 0.06 | 0.09 | 2100 | 8 | 1700 | 4.5 | 29 | SB |
| 24 | 115 | 0.3300 | -450 | 5 | 2900 | 0.25 | 0.16 | 2200 | 0.05 | 0.08 | 2500 | 8 | 1700 | 4.5 | 29 | SB |
| 25 | 115 | 0.3300 | -450 | 5 | 3000 | 0.25 | 0.14 | 2400 | 0.06 | 0.09 | 1800 | 4.5 | NA | NA | 29 | SB |

| | | | | | | | | | | | | | | | | |
|---|---|---|---|---|---|---|---|---|---|---|---|---|---|---|---|---|
| NA means not applicable. SB means small bubbles are present in the lenses. | | | | | | | | | | | | | | | | |

**Table 2**

| | | | | | Injection Stage 1 | | | Injection Stage 2 | | | Holding Stage 1 | | Holding Stage 2 | | Cure | |
|---|---|---|---|---|---|---|---|---|---|---|---|---|---|---|---|---|
| Run | Mold Temp. | Quantity (cin) | Back Pressure | Screw Speed | Pressure | Speed | Volume | Pressure | Speed | Volume | Pressure | Time | Pressure | Time | Time | Performance |
| 1 | 150 | 0.2925 | 100 | 25 | 2000 | 0.2 | 0.18 | 1500 | 0.04 | 0.09 | 1000 | 8 | 800 | 4.5 | 100 | IF |
| 2 | 150 | 0.2925 | -25 | 25 | 2500 | 0.2 | 0.18 | 2000 | 0.04 | 0.09 | 2000 | 8 | 1500 | 4.5 | 100 | IF |
| 3 | 150 | 0.2975 | -25 | 25 | 3000 | 0.2 | 0.18 | 2000 | 0.04 | 0.09 | 2000 | 8 | 1500 | 4.5 | 100 | IF |
| 4 | 150 | 0.3050 | -50 | 30 | 3250 | 0.2 | 0.18 | 2500 | 0.04 | 0.09 | 2500 | 8 | 1750 | 4.5 | 60 | IF |
| 5 | 150 | 0.3050 | -100 | 30 | 3250 | 0.2 | 0.18 | 2500 | 0.04 | 0.09 | 2500 | 8 | 1750 | 4.5 | 60 | B |
| 6 | 150 | 0.3050 | -100 | 30 | 3500 | 0.2 | 0.18 | 2500 | 0.04 | 0.09 | 2500 | 8 | 1750 | 4.5 | 50 | B |
| 7 | 150 | 0.3050 | -100 | 30 | 3500 | 0.2 | 0.18 | 2500 | 0.04 | 0.09 | 2500 | 8 | 1750 | 4.5 | 50 | B |
| 8 | 150 | 0.3050 | -100 | 30 | 3500 | 0.2 | 0.18 | 2500 | 0.04 | 0.09 | 2500 | 8 | 1750 | 4.5 | 45 | B |
| 9 | 150 | 0.3050 | -100 | 30 | 3500 | 0.2 | 0.18 | 2500 | 0.04 | | 2500 | 8 | 1750 | 4.5 | 37.5 | B |
| 10 | 150 | 0.3050 | -100 | 30 | 3500 | 0.2 | 0.18 | 2500 | 0.04 | 0.09 | 2500 | 8 | 1750 | 4.5 | 37.5 | B |
| 11 | 150 | 0.3050 | -100 | 30 | 3250 | 0.2 | 0.18 | 2500 | 0.04 | 0.09 | 2500 | 8 | 1750 | 4.5 | 35 | B |
| 12 | 150 | 0.3050 | -100 | 30 | 3250 | 0.2 | 0.18 | 2500 | 0.04 | 0.09 | 2500 | 8 | 1750 | 4.5 | 32.5 | B |
| 13 | 150 | 0.3050 | -100 | 30 | 3100 | 0.2 | 0.18 | 2750 | 0.04 | 0.09 | 2450 | 8 | 1750 | 4.5 | 30 | G |
| 14 | 150 | 0.3050 | -100 | 30 | 2900 | 0.2 | 0.18 | 2400 | 0.04 | 0.09 | 2450 | 8 | 1750 | 4.5 | 29 | G |
| 15 | 150 | 0.3050 | -100 | 30 | 2900 | 0.2 | 0.18 | 2400 | 0.04 | 0.09 | 2450 | 8 | 1750 | 4.5 | 28 | G |
| 16 | 150 | 0.3050 | -150 | 30 | 2900 | 0.2 | 0.18 | 2350 | 0.04 | 0.09 | 2850 | 8 | 1700 | 4.5 | 27 | G |
| 17 | 150 | 0.3050 | -150 | 30 | 2900 | 0.2 | 0.18 | 2350 | 0.04 | 0.09 | 2700 | 8 | 2300 | 4.5 | 28 | G |
| 18 | 150 | 0.2975 | -150 | 30 | 2900 | 0.2 | 0.18 | 2350 | 0.04 | 0.09 | 2700 | 8 | 2300 | 4.5 | 28 | G |

| | | | | | | | | | | | | | | | | |
|---|---|---|---|---|---|---|---|---|---|---|---|---|---|---|---|---|
| IF means the mold did not fill completely (incomplete fill). B means bubbles are present in the lenses. G means good lenses are fabricated. | | | | | | | | | | | | | | | | |

**Table 3**

| | | | | | Injection Stage 1 | | | Injection Stage 2 | | | Holding Stage 1 | | Holding Stage 2 | | Cure | |
|---|---|---|---|---|---|---|---|---|---|---|---|---|---|---|---|---|
| Run | Mold Temp | Quantity (cin) | Back Pressure | Screw Speed | Pressure | Speed | Vol. | Pressure | Speed | Volume | Pressure | Time | Pressure | Time | Time | Performance . |
| 1 | 150 | 0.3700 | -2000 | 75 | 4000 | 0.6 | 0.4 | 2800 | 0.1 | 0.09 | 2700 | 8 | 1700 | 4.5 | 300 | A/H |
| 2 | 150 | 0.4045 | -2000 | 75 | 4000 | 0.6 | 0.4 | 2800 | 0.1 | 0.09 | 2700 | 8 | 1700 | 4.5 | 300 | A/H |
| 3 | 150 | 0.4045 | -2000 | 75 | 4000 | 0.6 | 0.4 | 2800 | 0.1 | 0.09 | 2700 | 8 | 1700 | 4.5 | 300 | A/H |
| 4 | 150 | 0.4045 | -2000 | 75 | 4000 | 0.6 | 0.4 | 2800 | 0.1 | 0.09 | 2700 | 8 | 1700 | 4.5 | 300 | A/H |
| 5 | 150 | 0.4045 | -2000 | 75 | 4000 | 0.6 | 0.4 | 2800 | 0.1 | 0.09 | 2700 | 8 | 1700 | 4.5 | 300 | A/H |
| 6 | 150 | 0.4045 | -2000 | 75 | 4000 | 0.6 | 0.4 | 2800 | 0.1 | 0.09 | 2700 | 8 | 1700 | 4.5 | 300 | A/H |
| 7 | 150 | 0.4185 | -2000 | 75 | 4000 | 0.6 | 0.4 | 2800 | 0.1 | 0.09 | 2700 | 8 | 1700 | 4.5 | 300 | A/H |
| 8 | 150 | 0.3950 | -2000 | 75 | 4000 | 0.6 | 0.4 | 2800 | 0.1 | 0.09 | 2700 | 8 | 1700 | 4.5 | 300 | clear |
| 9 | 150 | 0.3950 | -2000 | 75 | 4000 | 0.6 | 0.4 | 2800 | 0.1 | 0.09 | 2700 | 8 | 1700 | 4.5 | 300 | SB |
| 10 | 150 | 0.3950 | -2000 | 75 | 4000 | 0.6 | 0.4 | 2800 | 0.1 | 0.09 | 2700 | 8 | 1700 | 4.5 | 250 | SB |
| 11 | 150 | 0.3950 | -2000 | 75 | 4000 | 0.6 | 0.4 | 2800 | 0.1 | 0.09 | 2700 | 8 | 1700 | 4.5 | 225 | SB |
| 12 | 150 | 0.3950 | -2000 | 75 | 4000 | 0.6 | 0.4 | 2800 | 0.1 | 0.09 | 2700 | 8 | 1700 | 4.5 | 225 | SB |
| 13 | 150 | 0.3950 | -2000 | 75 | 4000 | 0.6 | 0.4 | 2800 | 0.1 | 0.09 | 2700 | 8 | 1700 | 4.5 | 200 | SB |
| 14 | 150 | 0.3900 | -2000 | 75 | 4000 | 0.6 | 0.4 | 2800 | 0.1 | 0.09 | 2700 | 8 | 1700 | 4.5 | 175 | G |
| 15 | 150 | 0.3850 | -2000 | 75 | 4000 | 0.6 | 0.4 | 2800 | 0.1 | 0.09 | 2700 | 8 | 1700 | 4.5 | 150 | G |
| 16 | 150 | 0.3850 | -2000 | 75 | 4000 | 0.6 | 0.4 | 2800 | 0.1 | 0.09 | 2700 | 8 | 1700 | 4.5 | 125 | G |
| 17 | 150 | 0.3800 | -2000 | 75 | 4000 | 0.6 | 0.4 | 2800 | 0.1 | 0.09 | 2700 | 8 | 1700 | 4.5 | 100 | VG |
| 18 | 150 | 0.3800 | -2000 | 75 | 4000 | 0.6 | 0.4 | 2800 | 0.1 | 0.09 | 2700 | 8 | 1700 | 4.5 | 75 | VG |
| 19 | 150 | 0.3800 | -2000 | 75 | 4000 | 0.6 | 0.4 | 2800 | 0.1 | 0.09 | 2700 | 8 | 1700 | 4.5 | 50 | VG |
| 20 | 150 | 0.3800 | -2000 | 75 | 4000 | 0.6 | 0.4 | 2800 | 0.1 | 0.09 | 2700 | 8 | 1700 | 4.5 | 40 | VG |
| 21 | 150 | 0.3800 | -2000 | 75 | 4000 | 0.6 | 0.4 | 2800 | 0.1 | 0.09 | 2700 | 8 | 1700 | 4.5 | 30 | VG |
| 22 | 150 | 0.3800 | -2000 | 75 | 4000 | 0.6 | 0.4 | 2800 | 0.1 | 0.09 | 2700 | 8 | 1700 | 4.5 | 20 | VG |
| 23 | 150 | 0.3800 | -2000 | 75 | 4000 | 0.6 | 0.4 | 2800 | 0.1 | 0.09 | 2700 | 8 | 1700 | 4.5 | 25 | VG |

| | | | | | | | | | | | | | | | | |
|---|---|---|---|---|---|---|---|---|---|---|---|---|---|---|---|---|
| A/H means the lenses contain air and haze. G means good lenses form. VG means very good lenses form. | | | | | | | | | | | | | | | | |

**Table 4**

| | | | | | Injection Stage 1 | | | Injection Stage 2 | | | Holding Stage 1 | | Holding Stage 2 | | Cure | | |
|---|---|---|---|---|---|---|---|---|---|---|---|---|---|---|---|---|---|
| Run | Mold Temp. | Quantity (cin) | Back Press. | Screw Speed | Press. | Speed | Vol. | Press. | Speed | Vol. | Press. | Time | Press. | Time | Time | Press. | Performance |
| 1 | 150 | 0.3800 | 40 | 150 | 4000 | 0.6 | 0.14 | 2800 | 0.1 | 0.09 | 2700 | 8 | 1700 | 4.5 | 75 | -2000 | Uncured |
| 2 | 150 | 0.3800 | 120 | 150 | 4000 | 0.6 | 0.14 | 2800 | 0.1 | 0.09 | 2700 | 8 | 1700 | 4.5 | 75 | -2000 | LB |
| 3 | 150 | 0.3800 | 90 | 150 | 4000 | 0.6 | 0.14 | 2800 | 0.1 | 0.09 | 2700 | 8 | 1700 | 4.5 | 75 | -2000 | Fragile |
| 4 | 150 | 0.3800 | 70 | 150 | 4000 | 0.6 | 0.14 | 2800 | 0.1 | 0.09 | 2700 | 8 | 1700 | 4.5 | 75 | -2000 | Fragile |
| 5 | 150 | 0.3800 | 60 | 150 | 3000 | 0.3 | 0.14 | 2000 | 0.06 | 0.09 | 2700 | 8 | 1700 | 4.5 | 75 | -2000 | Fragile |
| 6 | 150 | 0.3800 | 60 | 150 | 3000 | 1.0 | 0.14 | 2000 | 0.06 | 0.08 | 1900 | 0.8 | 1700 | 4.5 | 75 | -2000 | SB |
| 7 | 150 | 0.3800 | 50 | 150 | 3000 | 2.0 | 0.14 | 2000 | 0.4 | 0.08 | 1900 | 0.8 | 1700 | 4.5 | 75 | -2000 | Uncured |
| 8 | 150 | 0.3800 | 65 | 150 | 3000 | 2.0 | 0.2 | 2000 | 0.3 | 0.1 | 1900 | 0.8 | 1700 | 4.5 | 75 | -2000 | Uncured |
| 9 | 150 | 0.3800 | 70 | 150 | 4500 | 3.0 | 0.2 | 2500 | 0.5 | 0.1 | 1900 | 0.8 | 1700 | 4.5 | 75 | -2000 | Uncured |
| 10 | 150 | 0.3800 | 70 | 150 | 3500 | 0.8 | 0.16 | 2500 | 0.2 | 0.09 | 1900 | 0.8 | 1700 | 4.5 | 75 | -2000 | LB |
| 11 | 150 | 0.3800 | 70 | 150 | 4000 | 0.6 | 0.14 | 2800 | 0.1 | 0.09 | 1900 | 0.8 | 1700 | 4.5 | 75 | -2000 | LB |

| | | | | | | | | | | | | | | | | | |
|---|---|---|---|---|---|---|---|---|---|---|---|---|---|---|---|---|---|
| LB means large bubbles form in the lenses. | | | | | | | | | | | | | | | | | |

**Table 5**

| | | | | | Injection Stage 1 | | | Injection Stage 2 | | | Holding Stage 1 | | Holding Stage 2 | | Cure | |
|---|---|---|---|---|---|---|---|---|---|---|---|---|---|---|---|---|
| Run | Mold Temp. | Quantity (cin) | Back Pressure | Screw Speed | Pressure | Speed | Volume | Pressure | Speed | Volume | Pressure | Time | Pressure | Time | Time | Performance |
| 1 | 150 | 0.3300 | -500 | 35 | 3450 | 0.6 | 0.16 | 2500 | 0.1 | 0.09 | 2200 | 8 | 1500 | 4.5 | 120 | SB |
| 2 | 150 | 0.3300 | -500 | 35 | 3450 | 0.6 | 0.16 | 2500 | 0.1 | 0.09 | 2200 | 8 | 1500 | 4.5 | 120 | SB |
| 3 | 150 | 0.3300 | -500 | 35 | 3450 | 0.6 | 0.16 | 2500 | 0.1 | 0.09 | 2200 | 8 | 1500 | 4.5 | 120 | SB |
| 4 | 150 | 0.3400 | -500 | 35 | 3450 | 0.6 | 0.16 | 2500 | 0.1 | 0.09 | 2200 | 8 | 1500 | 4.5 | 120 | SB |
| 5 | 150 | 0.3400 | -500 | 35 | 3450 | 0.6 | 0.16 | 2500 | 0.1 | 0.09 | 2100 | 8 | 1500 | 4.5 | 120 | VG |
| 6 | 150 | 0.3400 | -500 | 30 | 3450 | 0.6 | 0.16 | 2500 | 0.1 | 0.09 | 2000 | 8 | 1500 | 4.5 | 100 | VG |
| 7 | 150 | 0.3400 | -500 | 30 | 3450 | 0.6 | 0.16 | 2500 | 0.1 | 0.09 | 1900 | 8 | 1500 | 4.5 | 95 | LB |
| 8 | 150 | 0.3400 | -500 | 25 | 3450 | 0.6 | 0.16 | 2500 | 0.1 | 0.09 | 1800 | 8 | 1500 | 4.5 | 95 | LB |
| 9 | 150 | 0.3400 | -500 | 20 | 3450 | 0.6 | 0.16 | 2500 | 0.1 | 0.09 | 1900 | 8 | 1500 | 4.5 | 90 | G |
| 10 | 150 | 0.3400 | -500 | 20 | 3450 | 0.6 | 0.16 | 2500 | 0.1 | 0.09 | 1900 | 8 | 1500 | 4.5 | 85 | G |
| 11 | 150 | 0.3375 | -500 | 20 | 3450 | 0.6 | 0.16 | 2500 | 0.1 | 0.09 | 1900 | 8 | 1500 | 4.5 | 85 | G |
| 12 | 150 | 0.3375 | -500 | 20 | 3450 | 0.6 | 0.16 | 2500 | 0.1 | 0.09 | 1900 | 8 | 1500 | 4.5 | 80 | G |
| 13 | 150 | 0.3375 | -500 | 20 | 3450 | 0.6 | 0.16 | 2500 | 0.1 | 0.09 | 1900 | 8 | 1500 | 4.5 | 75 | F |
| 14 | 150 | 0.3375 | -500 | 20 | 3450 | 0.6 | 0.16 | 2500 | 0.1 | 0.09 | 1900 | 8 | 1500 | 4.5 | 70 | F |
| 15 | 150 | 0.3375 | -500 | 20 | 3450 | 0.6 | 0.16 | 2500 | 0.1 | 0.09 | 1900 | 8 | 1500 | 4.5 | 65 | F |
| 16 | 150 | 0.3375 | -500 | 20 | 3450 | 0.6 | 0.16 | 2500 | 0.1 | 0.09 | 1900 | 8 | 1500 | 4.5 | 60 | F |
| 17 | 150 | 0.3375 | -500 | 20 | 3450 | 0.6 | 0.16 | 2500 | 0.1 | 0.09 | 1900 | 8 | 1500 | 4.5 | 70 | F |
| 18 | 150 | 0.3375 | -500 | 20 | 3450 | 0.6 | 0.16 | 2500 | 0.1 | 0.09 | 1900 | 8 | 1500 | 4.5 | 70 | F |

**Table 6**

| | | | | | Injection Stage 1 | | | Injection Stage 2 Holding Stage 1 | | | | | Holding Stage 2 | | Cure | |
|---|---|---|---|---|---|---|---|---|---|---|---|---|---|---|---|---|
| Run | Mold Temp. | Quantity (cin) | Back Pressure | Screw Speed | Pressure | Speed | Volume | Pressure | Speed | Volume | Pressure | Time | Pressure | Time | Time | Performance |
| 1 | 150 | 0.330 | -500 | 35 | 3450 | 10.6 | 0.16 | 2500 | 0.1 | 0.09 | 1950 | 8 | 1500 | 4.5 | 50 | G |
| 2 | 150 | 0.330 | -500 | 35 | 3450 | 0.6 | 0.16 | 2500 | 0.1 | 0.09 | 1950 | 8 | 1500 | 4.5 | 45 | G |
| 3 | 150 | 0.350 | -500 | 35 | 3450 | 0.6 | 0.16 | 2500 | 0.1 | 0.09 | 1950 | 8 | 1500 | 4.5 | 45 | G |
| 4 | 150 | 0.350 | -500 | 35 | 3450 | 0.6 | 0.16 | 2500 | 0.1 | 0.09 | 1950 | 8 | 1500 | 4.5 | 40 | G |
| 5 | 150 | 0.360 | -250 | 25 | 3450 | 0.6 | 0.16 | 2500 | 0.1 | 0.09 | 1950 | 8 | 1500 | 4.5 | 40 | G |
| 6 | 150 | 0.360 | -250 | 25 | 3200 | 0.6 | 0.16 | 2500 | 0.1 | 0.09 | 1950 | 8 | 1500 | 4.5 | 40 | G |
| 7 | 150 | 0.360 | -250 | 25 | 3200 | 0.6 | 0.16 | 2500 | 0.1 | 0.09 | 1950 | 8 | 1500 | 4.5 | 35 | G |
| 8 | 150 | 0.360 | -250 | 25 | 3200 | 0.6 | 0.16 | 2500 | 0.1 | 0.09 | 1950 | 8 | 1500 | 4.5 | 35 | G |
| 9 | 150 | 0.360 | -150 | 25 | 3200 | 0.6 | 0.16 | 2500 | 0.1 | 0.09 | 1950 | 8 | 1500 | 4.5 | 35 | G |
| 10 | 150 | 0.360 | -150 | 25 | 3200 | 0.6 | 0.16 | 2500 | 0.1 | 0.09 | 1950 | 8 | 1500 | 4.5 | 30 | G |
| 11 | 150 | 0.360 | -150 | 25 | 3200 | 0.6 | 0.16 | 2500 | 0.1 | 0.09 | 1950 | 8 | 1500 | 4.5 | 30 | G |
| 12 | 150 | 0.360 | -150 | 25 | 3000 | 0.6 | 0.16 | 2500 | 0.1 | 0.09 | 1950 | 8 | 1500 | 4.5 | 30 | G |

**Table 7**

| | | | | | Infection Stage 1 | | | Injection Stage 2 | | | Holding Stage 1 | | Holding Stage 2 | | Cure | |
|---|---|---|---|---|---|---|---|---|---|---|---|---|---|---|---|---|
| Run | Mold Temp. | Quantity (cin) | Back Pressure | Screw Speed | Pressure | Speed | Volume | Pressure | Speed | Volume | Pressure | Time | Pressure | Time | Time | Performance |
| 1 | 150 | 0.330 | -150 | 25 | 2900 | 0.6 | 0.16 | 2100 | 0.1 | 0.09 | 1950 | 8 | 1800 | 0.5 | 50 | G |
| 2 | 150 | 0.330 | -150 | 25 | 2900 | 0.6 | 0.16 | 2100 | 0.1 | 0.09 | 1950 | 8 | 1800 | 0.5 | 50 | G |
| 3 | 150 | 0.330 | -150 | 25 | 2900 | 0.6 | 0.16 | 2100 | 0.1 | 0.09 | 1950 | 8 | 1800 | 0.5 | 45 | G |
| 4 | 150 | 0.340 | -150 | 25 | 2900 | 0.6 | 0.16 | 2100 | 0.1 | 0.09 | | 8 | 1800 | 0.5 | 45 | G |
| 5 | 150 | 0.340 | -150 | 25 | 2900 | 0.6 | 0.16 | 2100 | 0.1 | 0.09 | 1950 | 8 | 1800 | 0.5 | 40 | G |
| 6 | 150 | 0.340 | -150 | 25 | 2900 | 0.6 | 0.16 | 2100 | 0.1 | 0.09 | 1950 | 8 | 1800 | 0.5 | 40 | G |
| 7 | 150 | 0.340 | -150 | 25 | 2900 | 0.6 | 0.16 | 2100 | 0.1 | 0.09 | 1950 | 8 | 1800 | 0.5 | 40 | G |
| 8 | 150 | 0.340 | -150 | 25 | 2900 | 0.6 | 0.16 | 2100 | 0.1 | 0.09 | 1950 | 8 | 1800 | 0.5 | 35 | G |
| 9 | 150 | 0.340 | -150 | 25 | 2900 | 0.6 | 0.16 | 2100 | 0.1 | 0.09 | 1950 | 8 | 1800 | 0.5 | 35 | G |
| 10 | 150 | 0.340 | -150 | 25 | 2900 | 0.6 | 0.16 | 2200 | 0.1 | 0.09 | 1950 | 8 | 1800 | 0.5 | 30 | G |
| 11 | 150 | 0.340 | -150 | 25 | 3000 | 0.6 | 0.16 | 2300 | 0.1 | 0.09 | 2000 | 8 | 1800 | 0.5 | 30 | G |
| 12 | 150 | 0.340 | -150 | 25 | 3000 | 0.6 | 0.16 | 2300 | 0.1 | 0.09 | 2000 | 8 | 1800 | 0.5 | 30 | G |
| 13 | 150 | 0.340 | -150 | 25 | 3000 | 0.6 | 0.16 | 2300 | 0.1 | 0.09 | 2100 | 8 | 1800 | 0.5 | 25 | G |
| 14 | 150 | 0.340 | -150 | 25 | 3000 | 0.6 | 0.16 | 2300 | 0.1 | 0.09 | 2100 | 8 | 1800 | 0.5 | 25 | G |
| 15 | 150 | 0.340 | -150 | 25 | 3000 | 0.6 | 0.16 | 2300 | 0.1 | 0.09 | 2100 | 8 | 1800 | 0.5 | 25 | G |
| 16 | 150 | 0.340 | -150 | 25 | 3000 | 0.6 | 0.16 | 2300 | 0.1 | 0.09 | 2100 | 8 | 1800 | 0.5 | 25 | G |

**Table 8**

| | | | Injection Stage 1 Holding Stage 1 Holding Stage 2 | | | | | | | | | Cure | |
|---|---|---|---|---|---|---|---|---|---|---|---|---|---|
| Run | Mold Temp | Quantity (cin) | Back Pressure | Screw Speed | Pressure | Speed | Vol. | Pressure | Time | Pressure | Time | Time | Perform |
| 1 | 150 | 0.05 | -500 | 30 | 4000 | 0.6. | 0.04 | 2700 | 0.8 | 1700 | 0.45 | 50 | Air bubbles |
| 2 | 150 | 0.07 | -500 | 30 | 2800 | 0.18 | 0.02 | 2700 | 0.8 | 1700 | 0.45 | 70 | Brittle Lenses |
| 3 | 150 | 0.09 | -500 | 30 | 800 | 0.18 | 0.02 | 2700 | 0.8 | 1700 | 0.45 | 60 | Brittle Lenses |
| 4 | 150 | 0.09 | -500 | 30 | 2800 | 0.18 | 0.02 | 2700 | 0.8 | 1700 | 0.45 | 60 | Brittle Lenses |
| 5 | 150 | 0.09 | -500 | 30 | 2800 | 0.18 | 0.02 | 2700 | 0.8 | 1700 | 0.45 | 60 | Brittle Lenses |
| 6 | 150 | 0.09 | -500 | 30 | 2800 | 0.18 | 0.02 | 2700 | 0.8 | 1700 | 0.45 | 60 | Brittle Lenses |
| 7 | 150 | 0.09 | -500 | 30 | 2800 | 0.18 | 0.02 | 2700 | 0.8 | 1700 | 0.45 | 60 | Brittle Lenses |
| 8 | 150 | 0.09 | -500 | 30 | 2800 | 0.18 | 0.02 | 2700 | 0.8 | 1700 | 0.45 | 60 | Brittle Lenses |
| 9 | 150 | 0.09 | -500 | 30 | 2800 | 0.18 | 0.02 | 2700 | 0.8 | 1700 | 0.45 | 45 | Brittle Lenses |
| 10 | 150 | 0.09 | -500 | 30 | 2800 | 0.18 | 0.02 | 2700 | 0.8 | 1700 | 0.45 | 45 | Brittle Lenses |
| 11 | 150 | 0.09 | -500 | 30 | 2800 | 0.18 | 0.02 | 2700 | 0.8 | 1700 | 0.45 | 45 | Brittle Lenses |
| 12 | 150 | 0.09 | -500 | 30 | 2800 | 0.18 | 0.02 | 700 | 0.8 | 1700 | 0.45 | 45 | Brittle Lenses |
| 13 | 150 | 0.09 | -100 | 30 | 2800 | 0.18 | 0.02 | 2700 | 0.8 | 1700 | 0.45 | 45 | Brittle Lenses |
| 14 | 150 | 0.09 | -100 | 30 | 2800 | 0.18 | 0.02 | 2700 | 0.8 | 1700 | 0.45 | 45 | Brittle Lenses |
| 15 | 150 | 0.09 | -100 | 30 | 2800 | 0.18 | 0.02 | 2700 | 0.8 | 1700 | 0.45 | 45 | Brittle Lenses |

**Table 9**

| | | | | | Injection Stage 1 | | | Injection Stage 2 | | | Holding Stage 1 | | Holding Stage 2 | | Cure | |
|---|---|---|---|---|---|---|---|---|---|---|---|---|---|---|---|---|
| Run | Mold Temp | Quantity (cin) | Back Press. | Screw Speed | Press. | Speed | Vol. | Press. | Speed | Vol. | Press. | Time | Press. | Time | Time | Perform |
| 1 | 150 | 0.090 | -100 | 30 | 3000 | 0.3 | 0.04 | 2000 | 0.1 | 0.02 | 1900 | 8 | 1500 | 4.5 | 45 | IF |
| 2 | 150 | 0.090 | -100 | 30 | 3000 | 0.3 | 0.04 | 2000 | 0.1 | 0.02 | 1900 | 8 | 1500 | 4.5 | 45 | IF |
| 3 | 150 | 0.090 | -100 | 10 | 3000 | 0.3 | 0.04 | 2000 | 0.1 | 0.02 | 1900 | 8 | 1500 | 4.5 | 45 | Refill long |
| 4 | 150 | 0.090 | -100 | 15 | 3000 | 0.3 | 0.04 | 2000 | 0.1 | 0.02 | 1900 | 8 | 1500 | 4.5 | 45 | |
| 5 | 150 | 0.090 | -75 | 15 | 2500 | 0.2 | 0.05 | 1700 | 0.08 | 0.03 | 1600 | 8 | 1000 | 4.5 | 45 | |
| 6 | 150 | 0.090 | -50 | 15 | 2500 | 0.2 | 0.045 | 1800 | 0.08 | 0.025 | 1750 | 8 | 1300 | 4.5 | 45 | Better |
| 7 | 150 | 0.095 | -50 | 15 | 2300 | 0.18 | 0.045 | 1800 | 0.08 | 0.025 | 1750 | 8 | 1300 | 4.5 | 45 | Better |
| 8 | 150 | 0.100 | -25 | 15 | 2200 | 0.16 | 0.045 | 1700 | 0.07 | 0.025 | 1675 | 8 | 1300 | 4.5 | 45 | Better |
| 9 | 150 | 0.100 | -25 | 14 | 2100 | 0.15 | 0.045 | 1650 | 0.06 | 0.025 | 1625 | 8 | 1300 | 4.5 | 45 | IF |
| 10 | 150 | 0.105 | -25 | 14 | 2100 | 0.15 | 0.045 | 1650 | 0.06 | 0.025 | 1625 | 8 | 1300 | 4.5 | 45 | Air |
| 11 | 150 | 0.105 | -25 | 13 | 2000 | 0.14 | 0.045 | 1650 | 0.06 | 0.025 | 1625 | 8 | 1300 | 4.5 | 45 | Air |
| 12 | 150 | 0.105 | -25 | 13 | 2100 | 0.14 | 0.05 | 1650 | 0.07 | 0.033 | 1625 | 8 | 1300 | 4.5 | 45 | |
| 13 | 150 | 0.105 | -25 | 13 | 2100 | 0.14 | 0.05 | 1650 | 0.07 | 0.033 | 1625 | 8 | 1300 | 4.5 | 45 | Best |
| 14 | 150 | 0.105 | -25 | 13 | 2100 | 0.14 | 0.05 | 1625 | 0.07 | 0.023 | 1625 | 8 | 1300 | 4.5 | 45 | Air |
| 15 | 150 | 0.105 | -25 | 13 | 2100 | 0.14 | 0.052 | 1650 | 0.07 | 0.023 | 1625 | 8 | 1300 | 4.5 | 42 | Air |

**Table 10**

| | | | | | Injection Stage 1 | | | Injection Stage 2 | | | Holding Stage 1 | | Holding Stage 2 | | Cure | Performance | | |
|---|---|---|---|---|---|---|---|---|---|---|---|---|---|---|---|---|---|---|
| Run | Mold Temp | Quantity (cin) | Back Press. | Screw Speed | Press. | Speed | Vol. | Press. | Speed | Vol. | Press. | Time | Press. | Time | Time | No. Lenses with Voids | Release | No. Lenses with Cracks |
| 1 | 150 | 0.345 | -150 | 25 | 3000 | 0.6 | 0.16 | 2500 | 0.1 | 0.09 | 2160 | 8 | 1500 | 0 | 30 | 3 | hard | 0 |
| 2 | 150 | 0.345 | -150 | 25 | 3000 | 0.6 | 0.16 | 2500 | 0.1 | 0.09 | 2160 | 8 | 1500 | 0 | 30 | 2 | hard | 1 |
| 3 | 150 | 0.345 | -150 | 25 | 3000 | 0.6 | 0.16 | 2500 | 0.1 | 0.09 | 2160 | 8 | 1500 | 0 | 30 | 2 | hard | 1 |
| 4 | 150 | 0.345 | | 25 | 3000 | 0.6 | 0.16 | 2500 | 0.1 | 0.09 | 2160 | 8 | 1500 | 0 | 30 | 1 | hard | 2 |
| 5 | 150 | 0345 | -150 | 25 | 3000 | 0.6 | 0.16 | 2500 | 0.1 | 0.09 | 2160 | 8 | 1500 | 0 | 30 | 1 | hard | 2 |
| 6 | 150 | 0.345 | -150 | 25 | 3000 | 0.6 | 0.16 | 2500 | 0.1 | 0.09 | 2160 | 8 | 1500 | 0 | 30 | 0 | hard | 2 |
| 7 | 150 | 0.345 | -150 | 25 | 3000 | 0.6 | 0.16 | 2500 | 0.1 | 0.09 | 2160 | 8 | 1500 | 0 | 30 | 2 | hard | 3 |
| 8 | 150 | 0.345 | -150 | 25 | 3000 | 0.6 | 0.16 | 2500 | 0.1 | 0.09 | 2160 | 8 | 1500 | 0 | 30 | 1 | hard | 2 |
| 9 | 150 | 0.345 | -150 | 25 | 3000 | 0.6 | 0.16 | 2500 | 0.1 | 0.09 | 2160 | 8 | 1500 | 0 | 30 | 1 | hard | 2 |
| 10 | 150 | 0.345 | -150 | 25 | 3000 | 0.6 | 0.16 | 2500 | 0.1 | 0.09 | 2160 | 8 | 1500 | 0 | 30 | 3 | hard | |
| 11 | 150 | 0.345 | -150 | 25 | 3000 | 0.6 | 0.16 | 2500 | 0.1 | 0.09 | 2160 | 8 | 1500 | 0 | 30 | 2 | hard | 2 |
| 12 | 150 | 0.345 | -150 | 25 | 3000 | 0.6 | 0.16 | 2500 | 0.1 | 0.09 | 2160 | 8 | 1500 | 0 | 30 | 0 | hard | 2 |
| 13 | 150 | 0.345 | -150 | 25 | 3000 | 0.6 | 0.16 | 2500 | 0.1 | 0.09 | 2160 | 8 | 1500 | 0 | 30 | 3 | hard | 3 |
| 14 | 150 | 0.345 | -150 | 25 | 3000 | 0.6 | 0.16 | 2500 | 0.1 | 0.09 | 2160 | 8 | 1500 | 0 | 30 | 3 | hard | 3 |
| 15 | 150 | 0.345 | -150 | 25 | 3000 | 0.6 | 0.16 | 2500 | 0.1 | 0.09 | 2160 | 8 | 1500 | | 30 | 3 | hard | 3 |

**Table 11**

| Run | Number of Lenses with Voids | Release | Number of Lenses with Cracks |
|---|---|---|---|
| 1 | 1 | hard | 2 |
| 2 | 0 | hard | 2 |
| 3 | 1 | hard | 3 |
| 4 | 3 | hard | 3 |
| 5 | 0 | hard | 3 |
| 6 | 0 | hard | 3 |
| 7 | 1 | hard | 3 |
| 8 | 1 | hard | 3 |
| 9 | 3 | hard | 3 |
| 10 | 3 | hard | 3 |
| 11 | 3 | hard | 3 |
| 12 | 3 | hard | 3 |
| 13 | 3 | hard | 1 |
| 14 | 3 | hard | 1 |
| 15 | 3 | moderate | 3 |
| 16 | 3 | moderate | 3 |
| 17 | 3 | moderate | 2 |
| 18 | 3 | moderate | 2 |
| 19 | 3 | moderate | 1 |
| 20 | 2 | moderate | 2 |
| 21 | 2 | moderate | 1 |
| 22 | 2 | easy | 1 |
| 23 | 0 | easy | 2 |
| 24 | 0 | easy | 1 |
| 25 | 3 | easy | 1 |
| 26 | 3 | easy | 1 |
| 27 | 2 | easy | 0 |
| 28 | 0 | easy | 0 |
| 29 | 0 | easy | 0 |
| 30 | 0 | easy | 0 |

**Table 12**

| Run | Number of Lenses with Voids | Release | Number of Lenses with Cracks |
|---|---|---|---|
| 1 | 1 | fair | 1 |
| 2 | 0 | fair | 1 |
| 3 | 1 | fair | 2 |
| 4 | 2 | fair | 2 |
| 5 | 0 | fair | |
| 6 | 0 | fair | 2 |
| 7 | 0 | hard | 3 |
| 8 | 0 | hard | 3 |
| 9 | 0 | hard | 3 |
| 10 | 0 | fair | 2 |
| 11 | 0 | fair | 2 |
| 12 | 0 | fair | 2 |

**Table 13**

| Run | Number of Lenses with Voids | Release | Number of Lenses with Cracks |
|---|---|---|---|
| 1 | 0 | fair | 1 |
| 2 | 0 | fair | 2 |
| 3 | 0 | fair | 3 |
| 4 | 0 | fair | 2 |
| 5 | 0 | fair | 2 |
| 6 | 0 | fair | 2 |
| 7 | 0 | fair | 2 |
| 8 | 0 | fair | 2 |
| 9 | 0 | fair | 2 |
| 10 | 0 | easy | 0 |
| 11 | 0 | Easy | 0 |
| 12 | 0 | Easy | 1 |
| 13 | 0 | Easy | 0 |
| 14 | 0 | Easy | 0 |

**Table 14**

| Heat Profile | Silicone | PC | COC |
|---|---|---|---|
| 5 days at 150 °C | No change (1) | Yellow (4) | Yellow (3) |
| 16 hours at 200 °C | No change (1) | Dark yellow (6) | Brown (12) |

**Table 15**

| % Transmission at 400 nm at 1.8 mm thickness | Un-aged | 1 day 200 °C | 7 day 200 °C | 14 day 200 °C |
|---|---|---|---|---|
| Example 16 | 97 | 96 | 92 | 92 |
| Example 17 | 98 | 98 | 98 | 98 |

### DRAWINGS

Figure 1 is a schematic representation of liquid injection molding process equipment for use in the method of this invention.

Figure 2 is a cross sectional view of one side of a mold 106 taken along line 109 in Figure 1.

Figure 3 is a cross sectional view of the opposing side of the mold 106 in Figure 2.

Figure 4a is a cross sectional view of an optical device including an LED 401 and a lightguide 402.

Figure 4b is a cross sectional view of an optical device including an LED 401, a silicone lightguide 402, and an organic lightguide 404.

Figure 4c is a cross sectional view of an optical device including an LED 401 and a lightguide 402.

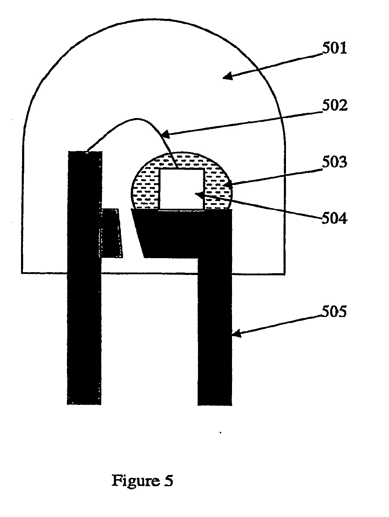

Figure 5 is a cross sectional view of an LED package.

### Reference Numerals

- 100: liquid injection molding process equipment
- 101: feed system
- 102: feed tank
- 103: feed tank
- 104: static mixer
- 105: extruder
- 106: mold
- 107: inlet
- 108: horizontal cross section line
- 109: vertical cross section line
- 110: assembly
- 201: mold cavity
- 202: vent
- 203: sprue
- 204: runner
- 205: gate
- 300: button
- 401: LED
- 402: lightguide (silicone)
- 403: inlet
- 404: organic lightguide
- 405: outlet
- 406: coupling agent
- 407: clad
- 408: treated surface
- 501: dome
- 502: wire
- 503: soft silicone
- 504: LED chip
- 505: lead frame

## Claims

1. A device comprising:
a) a lightguide fabricated from a silicone resin,
b) a light source coupled to an inlet of the lightguide, and
c) an organic optical device coupled to an outlet of the lightguide.

2. The device of claim 1, where the optical device is selected from the group consisting of a lens and an organic lightguide.

3. The device of any of claims 1 or 2, wherein the lightguide comprises a cured product of a composition comprising:
(Q) 100 parts of an organopolysiloxane resin represented by the following average compositional formula
R⁹ₛR¹⁰ₜSiO_{(4-s-t)/2} (VII)
where each R⁹ is independently an aliphatically unsaturated monovalent hydrocarbon group, each R¹⁰ is independently a substituted or unsubstituted monovalent hydrocarbon group other than R⁹, with the proviso that at least one R¹⁰ per molecule is an aromatic group, subscript s has a value ranging from 0.09 to 0.16, and subscript t has a value ranging from 1.00 to 1.20; with the provisos that (i) the organopolysiloxane resin comprises aliphatically unsaturated monovalent organic groups and aromatic groups and (ii) the organopolysiloxane resin has a weight-average molecular weight equal to or exceeding 3000 with polystyrene as reference and determined by gel chromatography;
(R) 10 to 50 parts by weight of an organooligosiloxane represented by the following average compositional formula
R¹¹ᵤR¹²ᵥSiO_{(4-u-v)/2} (VIII)
where each R¹¹ is independently an alkenyl group having 2 to 10 carbon atoms, each R¹² is independently a substituted or unsubstituted monovalent or non-substituted monovalent hydrocarbon group other than R¹¹, with the proviso that at least 10 mole % of R¹² comprise aromatic groups; subscript u has a value ranging from 0.60 to 0.80, and subscript v has a value ranging from 1.50 to 2.10; with the proviso that the organooligosiloxane comprises aliphatically unsaturated monovalent organic groups and aromatic groups;
(S) 20 to 100 parts by weight of an organohydrogenoligosiloxane or organohydrogenpolysiloxane represented by the following average compositional formula:
H_{w}R¹³ₓSiO_{(4-w-x)/2} (IX)
where each R¹³ is independently a substituted or unsubstituted monovalent or non-substituted monovalent hydrocarbon group other than aliphatically unsaturated monovalent organic groups, with the proviso that at least 20 mole % of R¹³ comprise aromatic groups; subscript w has a value ranging from 0.35 to 0.65, and subscript x has a value ranging from 0.90 to 1.70;
(D) a catalytic quantity of a hydrosilylation catalyst; and
(F) a mold release agent; where
the addition-curable organopolysiloxane resin composition cures to form an article having a hardness of 60 to 100 at 25 °C and 40 to 100 at 150 °C as measured by ASTM D2240-86.

4. The device of claim 3, where ingredient (F) has general formula: R¹⁷₃SiO(R¹⁷₂SiO)ₐₐ(R¹⁷R¹⁸SiO)_{bb}SiR¹⁷₃, where subscript aa has a value of 0 or greater, subscript bb has a value of 1 or greater, with the proviso that aa and bb have values sufficient that the mold release agent has a viscosity of 100 to 3,000 cps; each R¹⁷ is independently an alkyl group and each R¹⁸ is independently an aromatic group.

5. The device of any of claims 3 or 4, where in average compositional formula (VII), s has a value ranging from 0.10 to 0.15 and t has a value ranging from 1.00 to 1.15; in average compositional formula (VIII), u has a value ranging from 0.60 to 0.80, and v has a value ranging from 1.50 to 2.00; and in average compositional formula (IX), w has a value ranging from 0.35 to 0.65, and x has a value ranging from 1.30 to 1.70.

6. The device of any of claims 3-5, where component (R) is an organooligosiloxane expressed by average compositional formula:
(R¹⁵R¹⁶₂SiO)_{y} SiR¹⁶_{(4-y)} (X)
where each R¹⁵ is independently an aliphatically unsaturated monovalent organic group, each R¹⁶ is independently a substituted or unsubstituted monovalent hydrocarbon group other than R¹⁵, with the proviso that at least 10 mole % of R¹⁶ comprise aromatic groups; and subscript y is 2 or 3.

7. The device of any preceding claim, where the light source is a light emitting diode (LED).

8. The device of any of claims 2-7, where the optical device is the lens.

9. The device of any of claims 2-7, where the optical device is the organic lightguide.
